# EUROPEAN PATENT SPECIFICATION

(11) **EP 4 151 398 B1**
(45) Date of publication and mention of the grant of the patent: **12.03.2025**
(21) Application number: 22196775.5
(22) Date of filing: 21.09.2022
(51) Int. Cl.: B29D 12/02, B23P 21/00, B23P 23/04, G02C 13/00, B23C 3/00

(54) **HINGING-MACHINE FOR EYEWEAR AND HINGING METHOD**
SCHARNIERMASCHINE FÜR BRILLEN UND SCHARNIERVERFAHREN
MACHINE D'INSTALLATION DE CHARNIÈRES POUR LUNETTES ET PROCÉDÉ D'INSTALLATION DE CHARNIÈRES

(30) Priority: 21.09.2021 IT 202100024242
(43) Date of publication of application: 22.03.2023
(73) Proprietor: Autonoma Innovazione S.r.l., 31058 Susegana (TV) (IT)
(72) Inventor: GRASSIA, Alessio, 31029 Vittorio Veneto (TV) (IT); GALVANO, Sofia, 31010 Mareno di Piave (TV) (IT); DE CONTI, Mirco, 31010 Godega di Sant'Urbano (TV) (IT); POL, Fabio, 31025 Santa Lucia di Piave (TV) (IT)
(74) Representative: Frare, Paolo

(56) References cited:
- CN-A- 109 407 340
- CN-A- 112 743 348
- CN-A- 113 199 770
- CN-U- 203 227 860
- CN-U- 211 105 723
- IT-A1- 9 044 811

## Description

The present invention relates to a hinging-machine for eyewear and a method for hinging eyeglasses frame fronts performed using such a hinging-machine. It relates in particular to a machine and a method according to the preambles of claims 1 and 7, respectively, such as disclosed in document CN211105723U.

Nowadays, it is known to fix the arms of eyeglasses frames to the front of such frames by means of hinges that allow the arms to be folded approximately parallel to the frame front so as, for example, to facilitate the storage and transport of eyeglasses.

For this purpose, metal hinges are known which comprise two elements, hinged to each other, which in this text will be referred to as "hinge parts", one of which is fixed to the frame front and the other to one of the arms, so as to allow the rotation of that arm with respect to the frame front.

If the frame front is made, in whole or in part, of a thermoplastic material, for example a polymer such as cellulose acetate, each of the hinge parts can be fixed to the frame front, in particular to a portion of it made of thermoplastic material by means of a so-called hinging process, of the known type. This known hinging process is carried out by means of special machines, called "hinging-machines".

A known hinging-machine solution comprises a milling-station positioned between a first and a separate hinging-station.

The milling-station of such a known type of hinging-machine comprises a milling device, e.g. a numerically controlled milling cutter, for making a seat, hollow and open to the outside, on a thermoplastic portion of an eyeglasses frame front.

Such known type hinging-machines are equipped with measuring devices to determine the position of a frame front when it is positioned, for example, inside the milling-station, in order to allow the automation of milling operations.

The two hinging-stations of such a known type of hinging-machine each comprise a heating vice, suitable for fixing a hinge part, loaded in such a heating vice, in a seat, obtained in a portion of a frame front made of thermoplastic material; this heating vice, by passing an electric current through it, heats the hinge part by Joule effect, so that this hinge part melts the thermoplastic material of the frame front at the seat, remaining embedded therein when it cools down.

The known method for hinging a frame front performed using such a known type of hinging-machine involves positioning the frame front at one of two hinging-stations, e.g. the first hinging-station, bringing that frame front to the milling-station, milling a first seat on that frame front, bringing it back to the first hinging-station, and fixing a first hinge part at such first seat.

The frame front is then manually repositioned at the second hinging-station, rotated through approximately 180° from how it was previously positioned in the first hinging-station. Following this repositioning, the known method involves returning the frame front to the milling-station, milling a second seat on that frame front, returning the frame front to the second hinging-station, and finally fixing a second hinge part in that second seat.

However, this known solution has certain disadvantages.

First of all, the hinging method performed using this known type of hinging-machine requires, in order to allow the milling of the second seat and the subsequent insertion of the second hinge part therein, the manual repositioning of the frame front after the first hinge part has been fixed to it.

Such repositioning is often imprecise, and can cause errors when fixing the second hinge part.

It should be emphasised that precise positioning of the hinge part in relation to the frame front is essential, as an incorrect position of the hinge part leads to an incorrect position of the associated arm, and a possible consequent aesthetic and/or positioning defect of the eyeglasses on a user's front.

In addition, manual repositioning is time-consuming, negatively affecting the production time and overall cost of the eyeglasses frame made with such known solution.

The main task of the present invention is to solve the problems listed above, and thus to realise a hinging-machine for eyeglasses frames, and a method for hinging eyeglasses frame fronts using such a hinging-machine, that will enable hinging to be carried out accurately and efficiently, in particular by reducing the risk of making defective frames due to incorrect fixing of the hinge parts to the frame front.

A further aim of the invention is to reduce the overall production time and costs of an eyeglasses frame.

In particular, the task and purposes according to the present invention are achieved by an eyewear hinging-machine comprising:
- a milling-station equipped with milling means suitable for obtaining, by milling, one or more seats, hollow and open outwards, on one or more portions of an eyeglasses frame front, made of a thermoplastic material;
- a first hinging-station comprising first hinging means suitable for grabbing, preferably at the same time, two metallic hinge parts of two hinges for eyeglasses, and for fixing them in respective seats obtained in a frame front for eyeglasses frames, when such frame front is placed in the first hinging-station;
- first support and handling means suitable for supporting a frame front for eyeglasses frames and for moving it from the milling-station to the first hinging-station, and vice versa;

- a second hinging-station comprising second hinging means suitable for grabbing, preferably at the same time, two metallic hinge parts of two hinges for eyeglasses, and for fixing them in respective seats obtained in a frame front for eyeglasses frames, when such frame front is placed in the second hinging-station;
- second support and handling means suitable for supporting a frame front for eyeglasses frames and for moving it from the milling-station to the second hinging-station, and vice versa;
- measurement means suitable for obtaining the spatial position of a frame front for eyeglasses frames, or of a portion thereof, when the frame front is positioned on the first support and handling means or on the second support and handling means;
- control means comprised in, or operationally connected to, such hinging-machine and configured to control the milling means, the first and second hinging means, the first support and handling means, the second support and handling means, and the measurement means;
wherein:
- the milling means are configured to obtain, by milling, on a frame front for eyeglasses frames, two seats which are hollow and open outwards;
- the first hinging means are configured to fix two hinge parts in respective seats obtained in a frame front for eyeglasses frames;
- the second hinging means are configured to fix two hinge parts in respective seats obtained in a frame front for eyeglasses frames;
- the control means are configured to operate the milling means in such a way as to obtain by milling on a first frame front, located inside the milling-station, two seats for as many hinge parts and, at the same time, operate the first hinging means or the second hinging means to fix two hinge parts in respective seats of a second frame front, located respectively within the first hinging-station or the second hinging-station.

Advantageously, the control means are configured to control the milling means in such a way that they are able to perform, within the milling-station, a trimming process for the end pieces of an eyeglasses frame front.

Advantageously, the milling means comprise first handling means configured to move these milling means with respect to a frame front positioned on the first support and handling means or the second support and handling means.

In an advantageous embodiment, the first handling means are configured to move the milling means with rectilinear and/or rotary motion.

In an advantageous embodiment, the control means may be configured to control the measurement means in order to obtain the spatial position of a frame front of an eyeglass frame, or a portion thereof, when such frame front is positioned on the first support and handling means or on the second support and handling means, by performing a direct measurement on the frame front, for example a measurement involving direct contact between a measuring probe, such as a measuring sensor advantageously included in such measurement means, and the frame front, or a portion thereof.

In a further advantageous embodiment, the control means may be configured to control the measurement means in order to acquire the position of the first support and handling means or the second support and handling means by which a frame front is supported, and to derive the position of such frame front, or a portion thereof, respectively, on the basis of a direct measurement of the position of the first support and handling means, or of the second support and handling means by which the frame front is supported, and on the basis of one or more known data items relating to that frame front **(e.g.** the geometry of the frame front, preferably stored, **e.g.** in digital format, in the control unit).

Advantageously, the milling means may comprise a milling cutter suitable for milling one or more seats, hollow and open to the outside, on one or more thermoplastic portions of an eyeglasses frame front; preferably, the milling cutter is also suitable for performing a trimming process for the end pieces of an eyeglasses frame front.

In an advantageous embodiment, the milling means may comprise a first milling cutter, associated with or capable of being associated with the milling device and suitable for milling one or more seats, hollow and open outwards, on one or more portions made of thermoplastic material of a frame front for eyeglasses frames, and a separate second milling cutter, associated with or capable of being associated with the milling device and suitable for performing a trimming process for the end pieces of a frame front for eyeglasses frames.

Advantageously, the first hinging means comprise second handling means configured to move these first hinging means with respect to a frame supported by the first support and handling means and positioned in the first hinging-station.

Advantageously, the second handling means are configured to move the first hinging means with rectilinear and/or rotary motion.

Advantageously, the second hinging means comprise third handling means configured to move these second hinging means with respect to a frame supported by the second support and handling means and positioned in the second hinging-station.

Advantageously, the third handling means are configured to move the second hinging means with rectilinear and/or rotary motion.

Advantageously, the first hinging means comprise a first heating vice and a second heating vice, each equipped with a pair of metal jaws, each pair of metal jaws being configured to grab a hinge part.

Advantageously, the second hinging means comprise a third heating vice and a fourth heating vice, each equipped with a pair of metal jaws, each of such pairs of metal jaws being configured to grab a hinge part.

Advantageously, the measurement means comprise fourth handling means configured to move these measurement means selectively towards or away from a frame front positioned on the first positioning and handling means or the second positioning and handling means.

Preferably, the fourth handling means are configured in such a way as to move the measurement means with rectilinear and/or rotary motion.

Preferably, the measurement means comprise a tactile scanning probe.

Advantageously, the first support and handling means comprise:
- a first support plate in which a first support seat is obtained defined by a first support surface at least partially counter-shaped to a first reference portion of a first reference frame front and a second support plate in which a second support seat is obtained defined by a second support surface at least partially counter-shaped to a second reference portion of such first reference frame front;
- first closing means, configured to selectively move closer to each other the first support plate and the second support plate, so as to clamp therebetween a frame front for eyeglasses frames with a first portion, with a conformation substantially equal to the first reference portion, and with a second portion, with a conformation substantially equal to the second reference portion, in a fastening position wherein the counter-shaped parts of the first portion and of the first support surface match, and the counter-shaped parts of the second portion and of the second support surface match.

Advantageously, the first closing means can be controlled by the control means.

Advantageously, the first support and handling means can be advantageously configured to move the first and second support plates when they are in the fastening position, with rectilinear and/or rotary motion with respect to the milling-station and the first hinging-station.

Advantageously, the second support and handling means comprise:
- a third support plate wherein a third support seat is obtained defined by a third support surface at least partially counter-shaped to a third reference portion of a second reference frame front, and a fourth support plate wherein a fourth support seat is obtained defined by a fourth support surface at least partially counter-shaped to a fourth reference portion of the second reference frame front;
- second closing means, configured to selectively move closer to each other the third support plate and the fourth support plate, so as to clamp therebetween a frame front for eyeglasses frames with a third portion, with a conformation substantially equal to the third reference portion, and with a fourth portion, with a conformation substantially equal to the fourth reference portion, in a fastening position wherein the counter-shaped parts of the third portion and of the third support surface match, and the counter-shaped parts of the fourth portion and of the fourth support surface match.

Advantageously, the second closing means can be controlled by the control means.

Advantageously, the second support and handling means can be configured to move the third and fourth support plates when they are in the fastening position, with rectilinear and/or rotary motion with respect to the milling-station and the second hinging-station.

The task and purposes according to the present invention are further achieved by a method for hinging eyeglass frame fronts, realised using a hinging-machine according to the invention, comprising the following steps:
- placing a first frame front on the first support and handling means;
- placing a second frame front on the second support and handling means;
- loading a first and a second hinge part onto the first hinging means;
- loading a third and a fourth hinge part onto the second hinging means;
- after the step of placing a first frame front onto the first support and handling means, bringing the first frame front from the first hinging-station to the milling-station by means of the first support and handling means;
- before or after the step of bringing the first frame front from the first hinging-station to the milling-station, obtaining the position of the first frame front in the hinging-machine using the measurement means;
- after the step of bringing the first frame front from the first hinging-station to the milling-station, and the step of obtaining the position of the first frame front in the hinging-machine, using the measurement means, to obtain, in the milling-station, by means of milling means, a first and second seat, hollow and open to the outside, on a portion made of thermoplastic material of the first frame front, or, respectively, on two separate portions made of thermoplastic material of the first frame front;
- after the step of milling a first and second seat on a portion made of thermoplastic material of the first frame front, by means of milling means, bring the first frame front from the milling-station to the first hinging-station by means of the first positioning and handling means;
- after the step of bringing the first frame front from the milling-station to the first hinging-station and the step of loading a first and a second hinge part onto the first hinging means, fixing, in the first hinging-station, the first hinge part in the first seat and the second hinge part in the second seat by means of the first hinging means;
- after the step of placing a second frame front onto the second support and handling means, and at the same time or after the step of bringing the first frame front from the milling-station to the first hinging-station, bringing the second frame front from the second hinging-station to the milling-station by means of the second support and handling means;
- before or after the step of bringing the second frame front from the second hinging-station to the milling-station, obtaining the position of the second frame front in the hinging-machine using the measurement means;
- after the step of bringing the second frame front from the second hinging-station to the milling-station, and the step of obtaining the position of the second frame front in the hinging-machine, using the measurement means, to obtain by means of the milling means a third seat and a fourth seat, hollow and open to the outside, on a third portion made of thermoplastic material, or, respectively, on a third portion and a separate fourth portion made of thermoplastic material, of the second frame front.

Advantageously, the method for hinging frame fronts according to the invention can comprise the following steps:
- after the step of obtaining a third seat and a fourth seat on a portion made of thermoplastic material of the second frame front in the milling-station, by means of the milling means, bringing the second frame front from the milling-station to the second hinging-station by means of the second support and handling means;
- after the step of bringing the second frame front from the milling-station to the second hinging-station and the step of loading a second and a third hinge part onto the second hinging means, fixing, in the second hinging-station, the third hinge part in the third seat and the fourth hinge part in fourth seat by means of the second hinging means.

Advantageously, after placing the first frame front onto the first support and handling means, and the second frame front onto the second support and handling means, these first and second frame fronts are not removed from their respective first and second support and handling means during the execution of all the steps described above.

Advantageously, the hinging method according to the invention can comprise the following steps:
- after, or at the same time, as the step of bringing the second frame front from the milling-station to the second hinging-station, bringing the first frame front from the first hinging-station back to the milling-station, by means of the first support and handling means;
- after the step of bringing the first frame front from the first hinging-station back to the milling-station, performing a trimming process on the end pieces of the first frame front in the milling-station.

Advantageously, between the step of fixing the first hinge part in the first seat and the second hinge part in the second seat by the first hinging means and the step of processing the end pieces of the first frame front in the milling-station, the first frame front is not removed from the first support and handling means.

In an advantageous embodiment, after the trimming step is performed on the first frame front, it is removed from the hinging-machine.

In a further advantageous embodiment, after the step of fixing the first hinge part in the first seat and the second hinge part in the second seat by means of the first hinging means, the first frame front is removed from the hinging-machine without being subjected to the step of bringing the first frame front from the first hinging-station back to the milling-station, and the step of subjecting this first frame front to a trimming process of the end pieces in the milling-station.

Advantageously, after the first frame front is removed from the first support and handling means, a further frame front is fixed to the first support and handling means, and a new pair of hinge parts is loaded onto the first hinging means; advantageously, this further frame front is advantageously subjected to one or more of the steps of the method according to the invention previously described.

In an advantageous embodiment, once the first frame front is removed from the milling-station, the second frame front is advantageously returned to the milling-station by the second support and handling means, and is advantageously subjected to step of trimming the end pieces.

Advantageously, once the respective hinging step is completed, and any respective trimming of the end pieces, the second frame front can also be removed from the hinging-machine, advantageously in the milling-station or in the second hinging-station.

Advantageously, if the second frame front is subjected to the step of trimming the end pieces, this second frame front is not removed from the second support and handling means between the step of fixing the third hinge part in the third seat and the fourth hinge part in the fourth seat by the second hinging means.

In an advantageous embodiment, after removing the second frame front from the hinging-machine, a new pair of hinge parts is loaded onto the second hinging means, and a further frame front is fixed to the second support and handling means and is subjected to one or more steps of the method according to the invention previously described.

The features and advantages of this invention will be more evident from the following description, which is illustrative and not limiting, referring to the attached schematic drawings, in which:
- figure 1 is a front view of an advantageous embodiment of a hinging-machine according to the invention, during a step of the hinging process according to the invention;
- figure 2 is a plan view of the hinging-machine of figure 1 during the step of the hinging process according to the invention of figure 1;
- figure 3 is an enlarged detail of the milling-station of the hinging-machine of figure 1;
- figure 4 is an enlarged detail of figure **2****;**
- figure 5 is a plan view of the hinging-machine of figure 1 during a step of the hinging process according to the invention;
- figure 6 is a front view of the hinging-machine of figure 1 during the step of the hinging process according to the invention of figure 5;
- figure 7 is a plan view of the hinging-machine of figure 1 during a step of the hinging process according to the invention;
- figure 8 is a front view of the hinging-machine of figure 1 during the step of the hinging process according to the invention of figure 7;
- figure 9 is a plan view of the hinging-machine of figure 1 during a step of the hinging process according to the invention;
- figure 10 is a front view of the hinging-machine of figure 1 during the step of the hinging process of figure 9;
- figure 11 is a plan view of the hinging-machine of figure 1 during a step of the hinging process according to the invention;
- figure 12 is a front view of the hinging-machine of figure 1 during the step of the hinging process of figure 11;
- figure 13 is a plan view of the hinging-machine of figure 1 during a step of the hinging process according to the invention;
- figure 14 is a front view of the hinging-machine of figure 1 during the step of the hinging process of figure 13;
- figure 15 is a plan view of the hinging-machine of figure 1 during a step of the hinging process according to the invention;
- figure 16 is a front view of the hinging-machine of figure 1 during the step of the hinging process of figure 15;
- figure 17 is a plan view of the hinging-machine of figure 1 during a step of the hinging process according to the invention;
- figure 18 is a front view of the hinging-machine of figure 1 during the step of the hinging process of figure 17;
- figure 19 is a plan view of the hinging-machine of figure 1 during a step of the hinging process according to the invention;
- figure 20 is a front view of the hinging-machine of figure 1 during the step of the hinging process of figure 19;
- figure 21 is a plan view of the hinging-machine of figure 1 during a step of the hinging process according to the invention;
- figure 22 is a front view of the hinging-machine of figure 1 during the step of the hinging process of figure 21;
- figure 23 is a plan view of the hinging-machine of figure 1 during a step of the hinging process according to the invention;
- figure 24 is a front view of the hinging-machine of figure 1 during the step of the hinging process of figure 23;
- figure 25 is a plan view of the hinging-machine of figure 1 during a step of the hinging process according to the invention;
- figure 26 is a front view of the hinging-machine of figure 1 during the step of the hinging process of figure 25;
- figure 27 is a plan view of the hinging-machine of figure 1 during a step of the hinging process according to the invention;
- figure 28 is a front view of the hinging-machine of figure 1 during the step of the hinging process of figure 27;

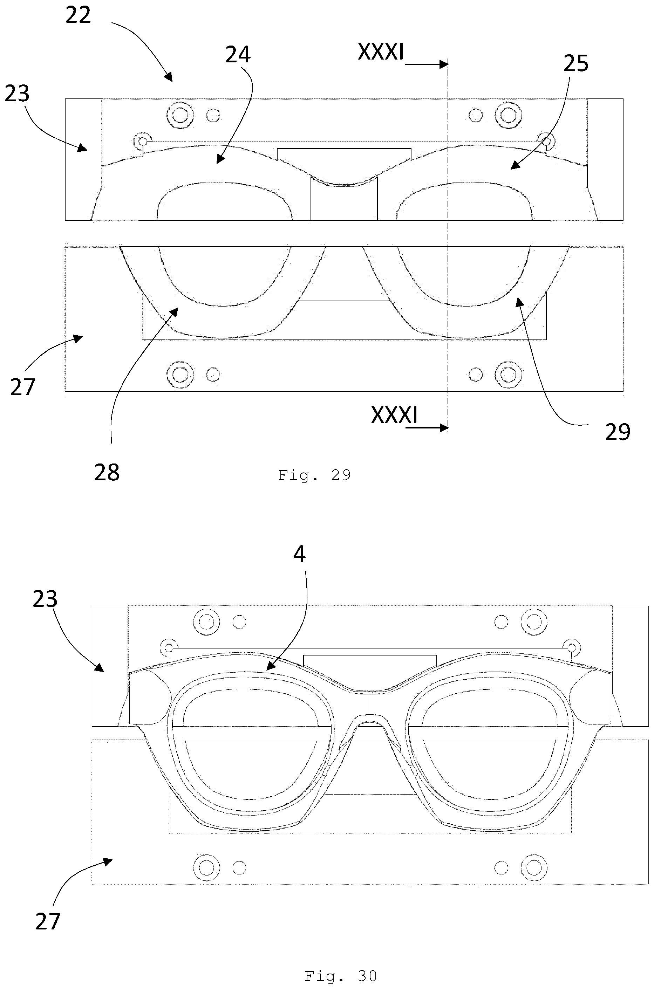

- figure 29 is a plan view of an advantageous embodiment of part of the first support and handling means of a hinging-machine according to the invention;
- figure 30 is a plan view of the first support means of figure 29, with a frame front of an eyeglasses frame fixed;

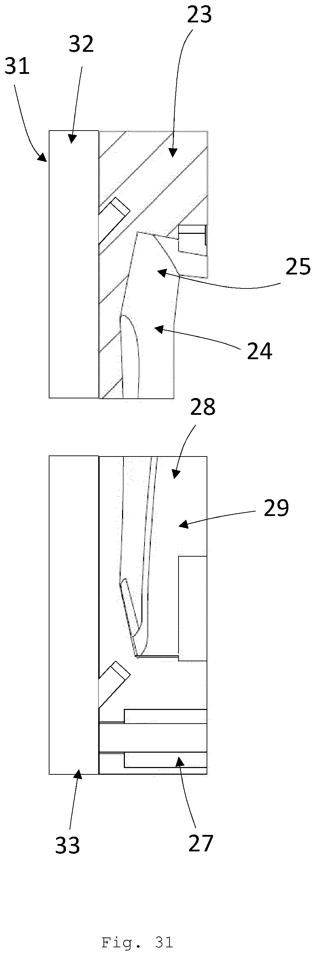

- figure 31 is a section operated according to the section plane XXXI-XXXI of figure 29;
- figure 32 is a front view of an advantageous embodiment of a reference frame front;
- figure 33 is a perspective view of an example of a frame front of an eyeglasses frame;
- figure 34 is a rear view of the frame front of figure 33, with two seats obtained for as many hinge parts;
- figure 35 is a rear view of the frame front of figure 33, with two hinge parts applied.

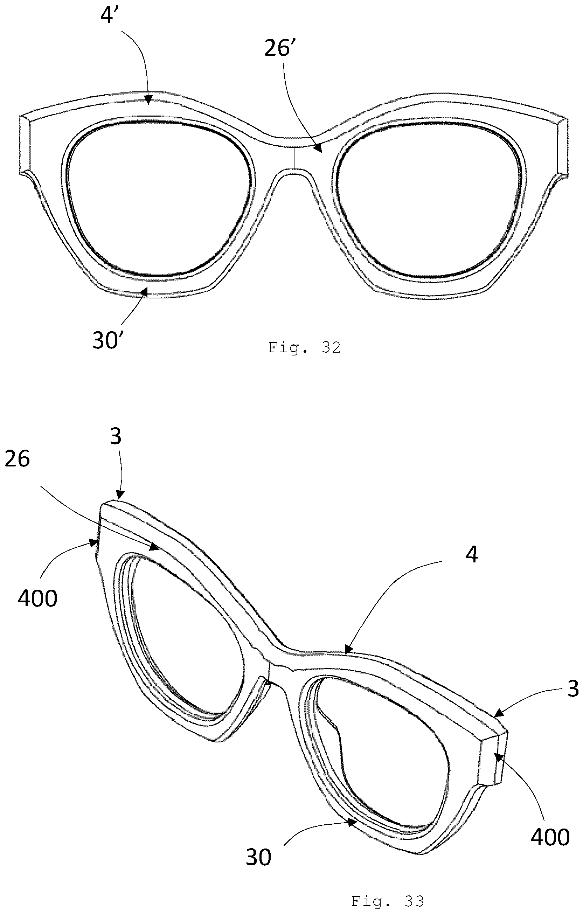

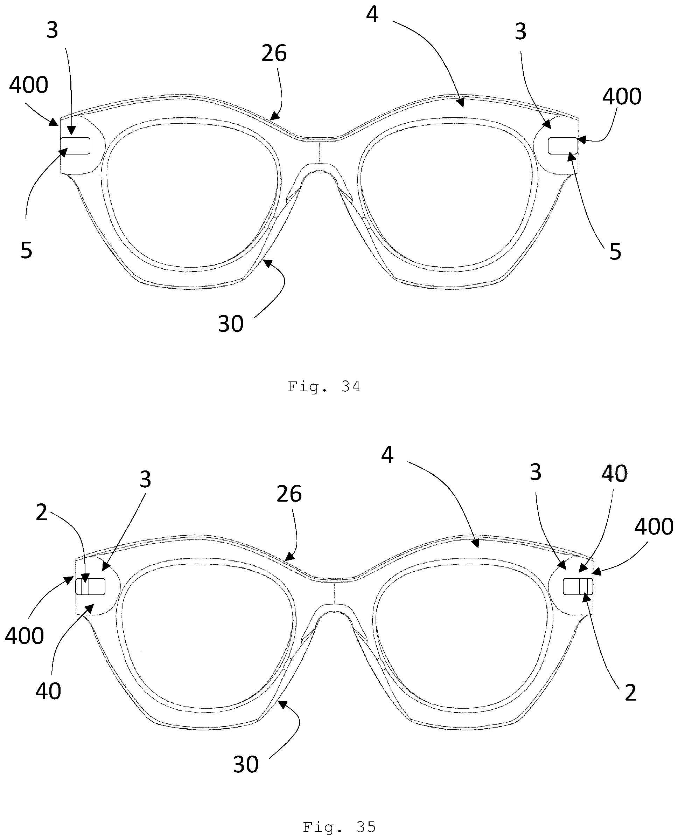

With reference to the appended figures, a hinging-machine for eyewear, capable of fixing two metallic hinge parts 2 of as many eyeglasses hinges, not illustrated in their entirety, to one or more portions 3 made of thermoplastic material, for example cellulose acetate, of the frame front 4 (an example of which is illustrated in figures 33 and 34 before the application of the hinge parts, and in figure 35 after the application of the hinge parts) of an eyeglasses frame, not illustrated in its entirety, has been indicated by the number **1.**

It is emphasised that a portion 3 made of thermoplastic material may coincide with the entire frame front 4, or constitute only a part of it.

A frame front 4 may advantageously also comprise several separate portions 3 made of thermoplastic material, e.g. separated from each other by one or more portions, not illustrated, made of other materials, such as metal.

It should also be noted that eyeglasses frames typically comprise two hinges, and thus two hinge parts 2 fixed to the frame front 4, generally on either side of the two regions thereof intended for the application of the lenses, commonly referred to as "end pieces", and indicated in figures 33, 34 and 35 by the number 400.

The hinging-machine 1 comprises a milling-station 1a, which will be better described below, provided with milling means 45 suitable for obtaining, by milling, one or more seats 5, preferably two seats, hollow and open towards the outside of the frame front 4, on one or more portions 3 made of thermoplastic material, of a frame front 4 of an eyeglasses frame.

In the advantageous embodiment in which the frame front 4 is made entirely of thermoplastic material, as for example in the appended figures, the two seats 2 can advantageously be obtained in the regions of the frame front 4 located at the lateral ends of the frame front 4, typically called end pieces, indicated with the number 400, lateral to the regions in which the lenses, not illustrated, are to be mounted.

The hinging-machine 1 further comprises a first hinging-station 1b, which will be better described below, comprising first hinging means 46a suitable for grasping a metallic hinge part 2 of an eyeglasses hinge, not illustrated in its entirety, and fix it to a seat 2 formed in a frame front 4 of an eyeglasses frame.

According to the invention, the first hinging means 46a are configured to fix two hinge parts 2 in respective seats 5 obtained on a frame front 4, when such frame front 4 is positioned in the first hinging-station 1b.

The hinging-machine 1 also comprises first support and handling means 47d, which will be described in more detail below, suitable for supporting a frame front 4 of an eyeglasses frame and move it from the milling-station 1a to the first hinging-station 1b, and vice versa.

The hinging-machine 1 further comprises a second hinging-station 1c, which will be better described below, comprising second hinging means 46b suitable for grasping a metallic hinge part 2 of an eyeglasses hinge, and fix it to a seat 2 formed in a frame front 4 of an eyeglasses frame.

According to the invention, the second hinging means 46a are configured to fix two hinge parts 2 in respective seats 5 obtained on a frame front 4, when such frame front 4 is positioned in the second hinging-station 1c.

The hinging-machine 1 according to the invention also according to the invention comprises second support and handling means 47e, which will be described in more detail below, suitable for supporting a frame front 4 of an eyeglasses frame and move it from the milling-station 1a to the second hinging-station 1c, and vice versa.

The hinging-machine 1 according to the invention further comprises measurement means 48, which will be further described below, suitable for obtaining the spatial position of a frame front 4 of an eyeglasses frame, or a portion thereof, when the frame front 4 is positioned on the first support and handling means 47d or the second support and handling means 47e.

The hinging-machine 1 according to the invention further comprises control means 49, schematically illustrated with a dashed rectangle, such as, for example, one or more programmable logic controllers, or PLCs, and/or one or more electronic boards, and/or one or more microcontrollers, not illustrated, comprised in, or operatively connected to the hinging-machine 1 and configured (e.g., programmed) to control the milling means 45, the first and second hinging means 46a, 46b, the first support and handling means 47d, the second support and handling means 47e, the measurement means 48.

According to the invention, the control means 49 are configured (e.g. programmed) to operate the milling means 45 in such a way as to obtain, by milling, on a first frame front 4 positioned within the milling-station 1a, two seats 5 for as many hinge parts 2 and, at the same time operate the first hinging means 46a or the second hinging means 46b, for fixing two hinge parts 2 in respective seats 5 of a second frame front 4, positioned within the first hinging-station 1b or the second hinging-station 1c, respectively (as in the embodiments illustrated in the appended figures).

In a further advantageous embodiment, the control means 49 can be configured to control the milling means 45 in such a way as to have them perform a trimming operation on the end pieces 400 of a frame front 4 of an eyeglasses frame, within the milling-station 1a.

The so-called "trimming of the end pieces" is a grinding process, known in the eyewear industry, advantageously performed by milling the frame front 4 at the end pieces 400 themselves, suitable for eliminating, or at least reducing, the possible misalignment between the axis of rotation of the hinges and the abutment surfaces between the arms and end pieces of an eyeglass frame.

Advantageously, the milling means 45 comprise first handling means 47a, comprising, for example, an electric motor, not illustrated, and special kinematic mechanisms, also not illustrated, configured to move such milling means 45 with respect to a frame front 4 positioned on the first support and handling means 47d or on the second support and handling means 47e.

In an advantageous embodiment of a hinging-machine 1 according to the invention, such as for example the one illustrated in the appended figures, the first handling means 47a are configured to move the milling means 45 by rotary motion and/or by rectilinear motion, preferably along a direction substantially parallel and/or perpendicular to a support plane α (e.g. the floor of an industrial hall, or other building) on which the hinging-machine 1 rests.

In an advantageous embodiment of the hinging-machine 1 according to the invention, the milling means 45 comprise a single milling device, e.g. a first milling cutter 50, suitable for making a seat 5, hollow and open towards the outside, on a portion made of thermoplastic material 3, or on several distinct portions made of thermoplastic material 3, of a frame front 4 for eyeglasses frames.

Preferably, the first milling cutter 50 is also suitable for trimming the end pieces 400 of a frame front 4 for eyeglasses frames.

In a further advantageous embodiment of the hinging-machine 1 according to the invention, not illustrated in the appended figures, the milling means 45 may comprise a first milling device (e.g. a first milling cutter 50) and a distinct second milling device (e.g. a second milling cutter, not illustrated), one suitable for making two seats 5, hollow and open towards the outside, on a thermoplastic portion 3, or on several distinct thermoplastic portions 3, of a frame front 4 for eyeglasses frames, and the other suitable for trimming the end pieces 400 of a frame front 4 for eyeglasses frames.

Advantageously, the first hinging means 46a comprise second handling means 47b, comprising, for example, an electric motor, not illustrated, and possibly suitable kinematic mechanisms, also not illustrated, configured to move such first hinging means 46a with respect to a frame 4 supported by the first support and movement means 47d and positioned in the first hinging-station 1b.

Advantageously, the control means 49 are configured to control the second handling means 47b.

In an advantageous embodiment of a hinging-machine 1 according to the invention, such as for example the one illustrated in the appended figures, the second handling means 47b are configured to move the first hinging means 46a by rotary motion and/or by rectilinear motion, preferably along a direction substantially parallel and/or perpendicular to a support plane α on which the hinging-machine 1 rests.

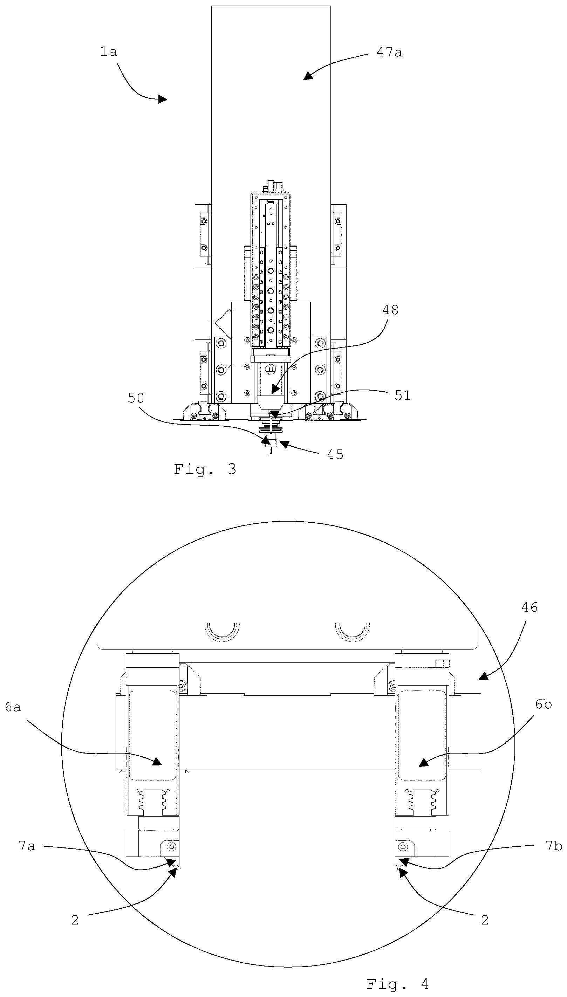

In an advantageous embodiment of a hinging-machine 1 according to the invention, such as that illustrated in the appended figures, the first hinging means 46a comprise a first heating vice 6a and a second heating vice 6b, each having a pair of metallic jaws 7a, 7b (of which only one jaw of the pair 7a, and one jaw of the pair 7b is shown in figure 4); such first and second heating vices 6a and 6b are advantageously configured to each grab a hinge part 2 with respective pairs of jaws 7a, 7b, selectively bringing the jaws of each pair closer to each other.

In an advantageous embodiment of a hinging-machine 1 according to the invention, such as that illustrated in the appended figures, the second hinging means 46b comprise third handling means 47c, comprising, for example, an electric motor, not illustrated, and possibly suitable kinematic mechanisms, also not illustrated, configured to move such second hinging means 46b.

Advantageously, the control means 49 are configured to control the third handling means 47c.

In an advantageous embodiment of a hinging-machine 1 according to the invention, such as for example the one illustrated in the appended figures, the third handling means 47c are configured to move the second hinging means 46b by rotary motion and/or by rectilinear motion, preferably along a direction substantially parallel and/or perpendicular to a support plane α on which the hinging-machine 1 rests.

In an advantageous embodiment of a hinging-machine 1 according to the invention, such as that illustrated in the appended figures, the second hinging means 46b comprise a third heating vice 6c and a fourth heating vice 6d, each having a pair of metal jaws (advantageously the same as the jaws 7a and 7b respectively), not illustrated; said third and fourth heating vices 6c and 6d are each configured to grab a hinge part 2 with their respective pairs of jaws, preferably by bringing the jaws of each pair closer together.

The control means 49 are advantageously configured to control third handling means 47c.

Advantageously, the first support and handling means 47d comprise a first support plate 23 in which a first support seat 24 is obtained defined by a first support surface 25 at least partially counter-shaped to a first reference portion 26' of a first reference frame front 4' and a second support plate 27 in which a second support seat 28 is obtained defined by a second support surface 29 at least partially counter-shaped to a second reference portion 30' of such first reference frame front 4'.

It is emphasised that in the present text, when it is said that a first element is "counter-shaped" to a second element, it means that such first element has a conformation such that it can potentially rest on, and fit perfectly with, the second element; for example, to say that the first support surface 25 is at least partially counter-shaped to a first reference portion 26' means that the first reference portion 26' can potentially rest on, and fit perfectly with, at least part (as "at least partially" is specified in this case) of the first support surface 29.

It is emphasised that the first reference frame front 4' does not necessarily have to be a "physical" frame front, but can advantageously be a frame front that has only been drawn, e.g. by means of a computer drawing programme, as long as it has a well-defined conformation; in other words, the first reference frame front 4' can in essence be the construction drawing of a frame front, and not necessarily an actual frame front made according to that construction drawing.

Advantageously, such first support and handling means 47d comprise first closing means 31, configured to selectively move closer to each other the first support plate 23 and the second support plate 27, so as to clamp therebetween a frame front 4 for eyeglasses frames with a first portion 26, with a conformation substantially the same as the first reference portion 26', and with a second portion 30, with a conformation substantially equal to the second reference portion 30', in a fastening position wherein the counter-shaped parts of the first portion 26 and of the first support surface 25 match, and the counter-shaped parts of the second portion 30 and of the second support surface 29 match.

In this way, in the fastening position, the first portion 26 and the second portion 30 are firmly fixed in their respective first seat 24 and second seat 28, so that the risk of the frame front 4 moving in relation to the first and second support plate and/or becoming deformed during the application of hinge parts 2 or during milling is extremely reduced.

In an advantageous embodiment, such first closing means 31 may, for example, comprise a first slide 32 and a second slide 33, connected, preferably directly, or, alternatively, by means of special kinematic mechanisms, not illustrated, to movement means, not illustrated, such as, for example, a gear motor, capable of selectively bringing said first slide 32 and second slide 33 closer to or further apart from each other.

Advantageously, the first closing means 31 can be controlled by the control means 49.

The first support and handling means 47d can be advantageously configured to move the first and second support plates 23 and 27 when they are in the fastening position, with rectilinear and/or rotary motion with respect to the milling-station 1a and the first hinging-station 1b.

For example, the first support and handling means 47d may comprise special first forward motion means 471, such as first worm screws, or guides, or racks, on which the first slide 32 and the second slide 33 may be moved, for example by means of a special electric motor, not illustrated, advantageously controlled by the control means 49, so as to be able to move from the milling-station 1a to the first hinging-station 1b, and vice versa.

Advantageously, the second support and handling means 47e comprise a third support base 23a in which a third support seat is obtained, not illustrated, defined by a third support surface, also not illustrated, at least partially counter-shaped to a third reference portion, not illustrated, of a second reference frame front, not illustrated, and a fourth support base 27a in which a fourth support seat is obtained, not illustrated, defined by a fourth support surface, not illustrated, at least partially counter-shaped to a fourth reference portion, not illustrated, of the second reference frame front, not illustrated.

Also with reference to the second reference frame front, it is emphasised that it does not necessarily have to be a "physical" frame front, but it can advantageously be a frame front that has only been drawn, e.g. by means of a computer drawing programme, as long as it has a well-defined conformation; in other words, the second reference frame front can in essence be the construction drawing of a frame front, and not necessarily an actual frame front made according to that construction drawing.

Advantageously, the second reference frame front can be equal to the first reference frame front 4', in which case the third support seat and the fourth support seat are advantageously equal, respectively, to the first support seat 24 and to the second support seat 28; this advantageous embodiment allows the first support and handling means 47d, and the second support and handling means 47e, to be associated with frame fronts having the same conformation.

Advantageously, the second support and handling means 47e comprise second closing means, not illustrated, configured to selectively move closer to each other the third support plate 23a and the fourth support plate 27a, so as to clamp therebetween a frame front 4 for eyeglasses frames with a third portion, not illustrated, with a conformation substantially equal to the third reference portion, and with a fourth portion, not illustrated, with a conformation substantially equal to the fourth reference portion, in a fastening position wherein the counter-shaped parts of the third portion and of the third support surface match, and the counter-shaped parts of the fourth portion and of the fourth support surface match.

In this way, in the fastening position, the third and fourth portions are firmly fixed in their respective third and fourth seats, so that the risk of the frame front 4 moving in relation to the third and fourth support plate and/or becoming deformed during the application of hinge parts 2 or during milling is extremely reduced.

In an advantageous embodiment, the second closing means may, for example, comprise a third slide, not illustrated, advantageously analogous to the first slide, and a fourth slide, not illustrated, advantageously analogous to the second slide, connected, preferably directly or, alternatively, by means of special kinematic mechanisms, not illustrated, to movement means, not illustrated, such as a gear motor, capable of selectively bringing the third slide and fourth slide closer to or further away from each other.

Advantageously, the second closing means can be controlled by the control means 49.

Advantageously, the second support and handling means 47e can be configured to move the third and fourth support plates 23a and 27a, when they are in the fastening position, with rectilinear and/or rotary motion with respect to the milling-station 1a and the second hinging-station 1c.

For example, the second support and handling means 47e may comprise special second forward motion means 472, such as second worm screws, or guides, or racks, on which the third slide and the fourth slide may be moved, for example by means of a special electric motor, not illustrated, advantageously controlled by the control means 49, so as to be able to move from the milling-station 1a to the second hinging-station 1c, and vice versa.

In an advantageous embodiment of a hinging-machine 1 according to the invention, such as the one illustrated in the appended figures, the measurement means 48 comprise a tactile scanning probe 51, generally called a "measuring probe", preferably comprised in the milling-station 1a.

In further advantageous embodiments of the hinging-machine 1 according to the invention, not illustrated in the appended figures, the measurement means 48 may comprise a plurality of tactile scanning probes, comprised, for example, in the milling-station 1a and/or in the first hinging-station 1b and/or in the second hinging-station 1c, and/or outside of these stations.

Advantageously, the measurement means 48 may comprise, as an alternative or in addition to a tactile scanning probe 51, an optical measuring device, not depicted in the appended figures, suitable for obtaining the spatial position of a frame front 4 of an eyeglasses frame, or a portion thereof, when said frame front 4 is positioned on the first support and handling means 47d or on the second support and handling means 47e.

In an advantageous embodiment of the hinging-machine 1 according to the invention, the control means 49 may be configured (e.g. programmed) to control the tactile scanning probe 51 in order to obtain the spatial position of a frame front 4 of an eyeglasses frame, or a portion thereof, when such frame front 4 is positioned on the first support and handling means 47d or the second support and handling means 47e, for example by performing a direct measurement, advantageously involving direct contact of the probe 51 with the frame front 4, or with a portion thereof.

In a further advantageous embodiment of the hinging-machine 1 according to the invention, the control means 49 may be configured to control the measurement means 48, for example the tactile scanning probe 51, in order to advantageously obtain, respectively by direct contact, the position of the first support and handling means 47d, or of the second support and handling means 47e by which the frame front 4 is supported, and to obtain the position of such frame front 4, or a portion thereof, on the basis (e.g. by means of an appropriate calculation) respectively of the direct detection of the position of the first support and handling means 47d, or of the second support and handling means 47e, by which the frame front 4 is supported, and on the basis of a known data item relating to the frame front 4, for example the geometry of the frame front 4, preferably stored, for example in digital format, in the control unit 49, for example, but not necessarily, in the form of a CAD or CAM file.

The following describes an advantageous embodiment of a method for hinging frame fronts 4 for eyeglasses frames realised using a hinging-machine 1 according to the invention.

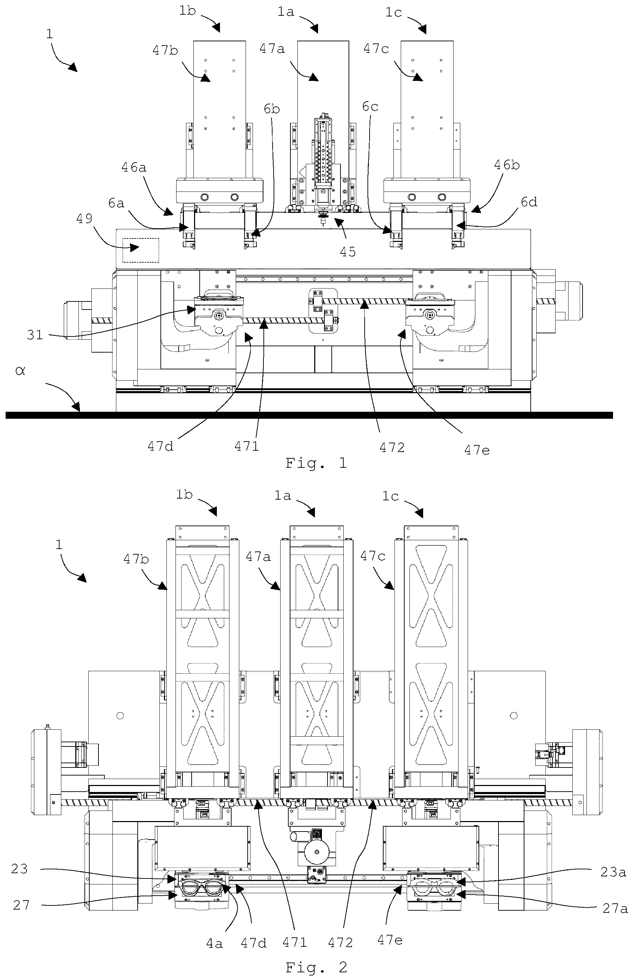

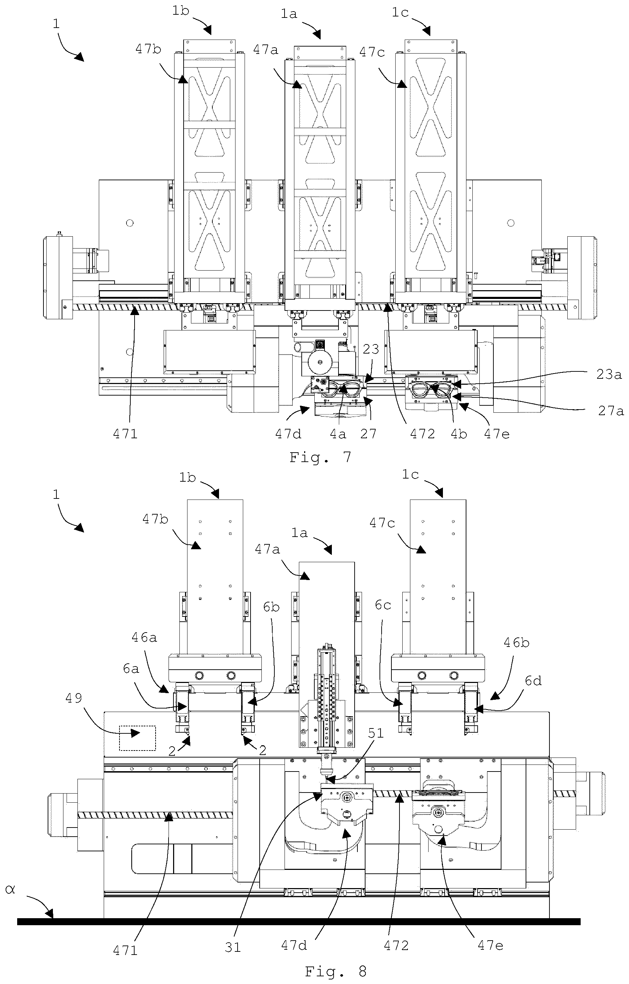

The method according to the invention comprises a step in which a first eyeglasses frame front, indicated in the appended figures with the number 4a, is positioned on the first support and handling means 47d (a condition illustrated for example in figures 1 and 2), and a step in which a second eyeglasses frame front, indicated in the appended figures with the number 4b, is positioned on the second support and handling means 47e (a condition illustrated for example in figures 7 and 8).

Advantageously, the positioning of the first frame front 4a and the second frame front 4b may take place at the same time or, as in the embodiment illustrated in the enclosed figures, one of the two frame fronts may be positioned on the respective first or second support and handling means after the other frame front, for example after the latter has already been subjected to one or more of the steps of the method according to the invention that will be illustrated below.

In an advantageous embodiment of the method according to the invention, the first frame front 4a is fixed to the first support and handling means 47d, using the first and second support plates 23 and 27, and the second frame front 4b is fixed to the second support and handling means 47e, using the third and fourth support plates 23a and 27a.

The method according to the invention comprises a step of loading a first and a second hinge part 2, onto the first hinging means 46a, within the first hinging-station 1b, and a step of loading a third and a fourth hinge part 2, onto the second hinging means 46b, within the second hinging-station 1b.

The step in which the first and second hinge parts 2 are loaded onto the first hinging-means 46a may be performed before, at the same time, or after the step in which the first frame front 4a is placed on the first support and handling means 47d.

Advantageously, the step in which the third and fourth hinge parts 2 are loaded onto the second hinging-means 46b may be performed before, at the same time, or after the step in which the second frame front 4b is placed on the second support and handling means 47e.

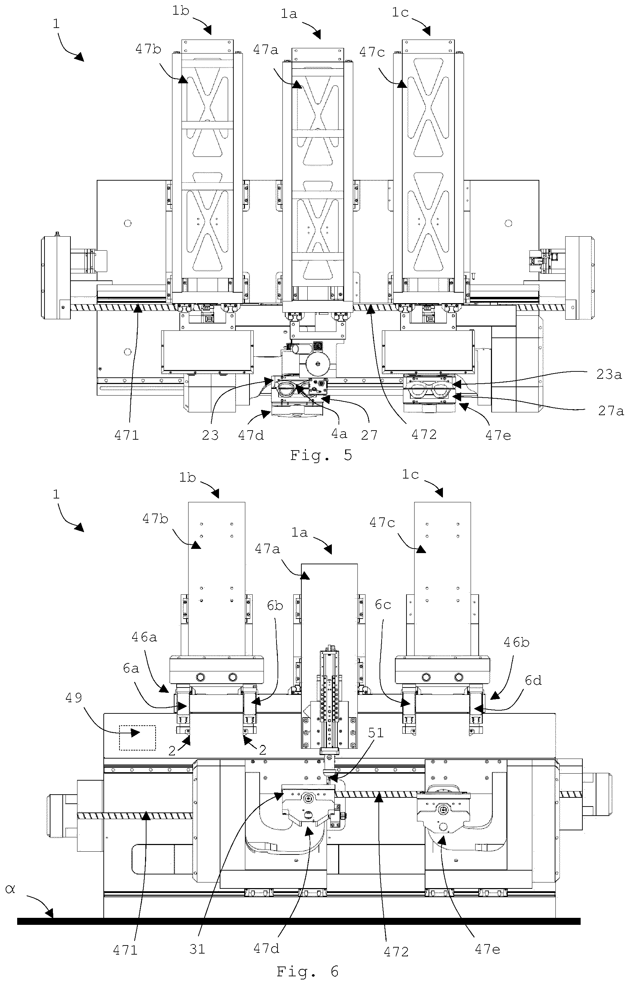

After the step in which the first frame front 4a is placed on the first support and handling means 47d, the method according to the invention comprises a step in which the first frame front 4a is brought from the first hinging-station 1b to the milling-station 1a by means of the first support and handling means 47d (condition illustrated for example in figures 5 and 6).

Before or after the step in which the first frame front 4a is brought from the first hinging-station 1b to the milling-station 1a, the method according to the invention comprises a step in which the position of the first frame front 4a is detected in the hinging-machine 1, using the measurement means 48 (as illustrated, for example, in figures 5, 6, 7 and 8).

In an advantageous embodiment of a hinging-machine 1 according to the invention, such as the one illustrated in the appended figures, the measurement means 48 are only comprised in the milling-station 1a.

In this case, the step in which the position of the first frame front 4a is detected in the hinging-machine 1, using the measurement means 48, is carried out after the step in which the first frame front 4a is brought from the first hinging-station 1b to the milling-station 1a.

Advantageously, the measurement means 48 may be present, alternatively or in addition to the milling-station 1a, in the first hinging-station 1b; in this case, the step in which the position of the first frame front 4a in the hinging-machine 1 is detected, using the measurement means 48, may be performed before the step in which the first frame front 4a is brought from the first hinging-station 1b to the milling-station 1a.

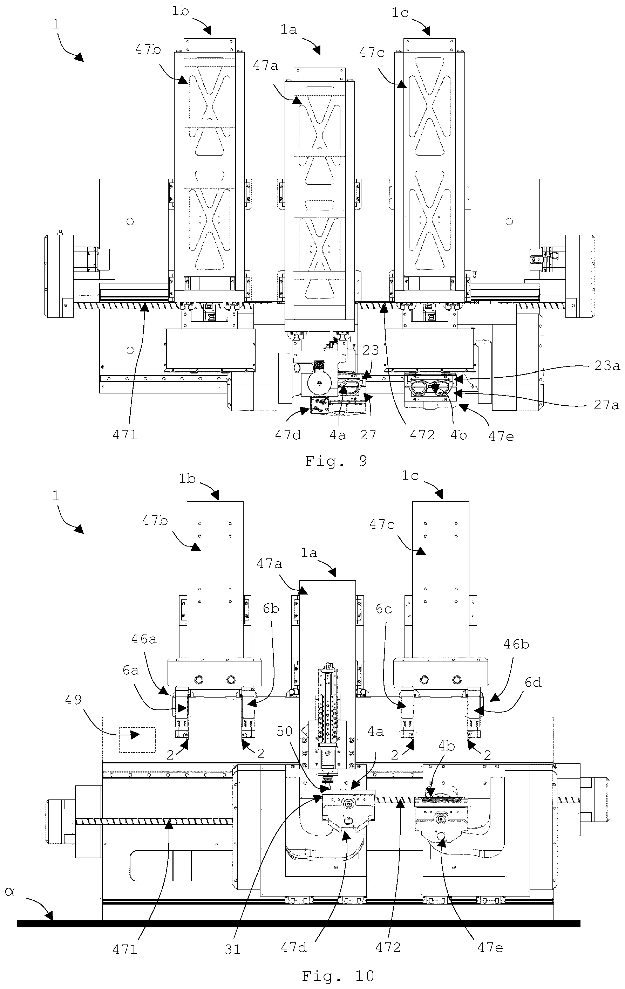

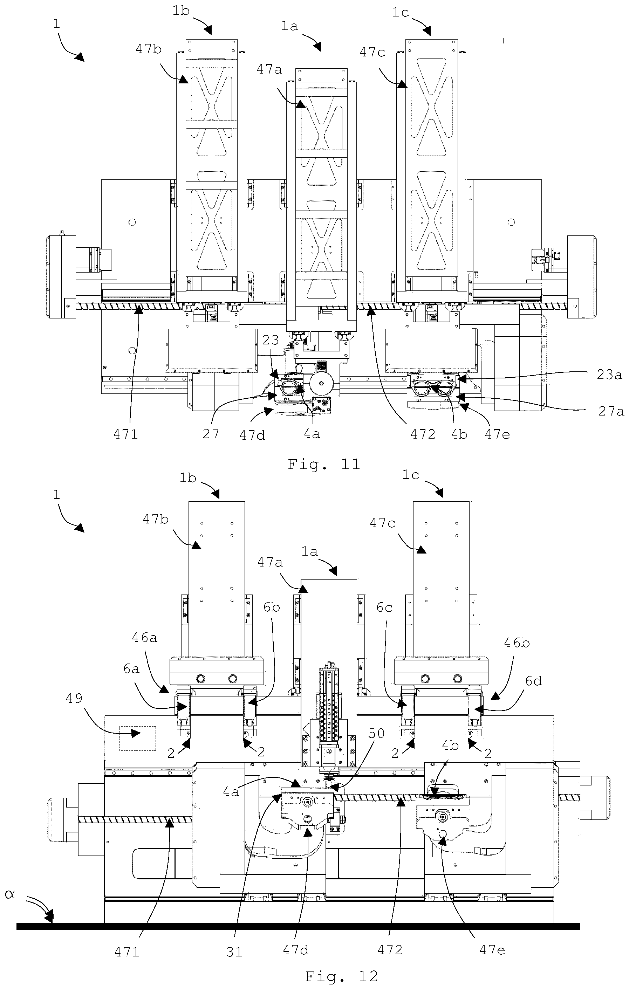

The method according to the invention comprises, after the step in which the first frame front 4a is brought from the first hinging-station 1b to the milling-station 1a, and the step in which the position of the first frame front 4a is detected in the hinging-machine 1, using the measurement means 48, a step (illustrated for example in figures 9, 10, 11 and 12) in which, by milling, a first and a second seat 5, hollow and open outwards, are obtained on a first portion 3 made of thermoplastic material of the first frame front 4a, or, respectively, on a first portion and a distinct second portion made of thermoplastic material, of the first frame front 4a.

In an advantageous embodiment of the method according to the invention, the first and second seat 5 are obtained sequentially on the first frame front 4a, i.e. one after the other.

A further advantageous embodiment of the method according to the invention, not illustrated, provides, preferably, but not necessarily, to obtain the position of the first frame front 4a, or a portion thereof, both before obtaining the first seat 5 and before obtaining the second seat 5, thereby limiting the risk of inaccurate machining due, for example, to misalignment of the first frame front 4a with respect to the milling means 45, caused, for example, by the milling operations to obtain the first seat 5.

In a further advantageous embodiment of the method according to the invention, the first and second seat 5 are obtained on the first frame front 4a at the same time.

The method according to the invention comprises, after the step in which a first seat 5 and a second seat 5 are obtained by milling, a step in which the first frame front 4a is brought from the milling-station 1a to the first hinging-station 1b (condition illustrated for example in figures from 13 to 20) by means of the first support and handling means 47d.

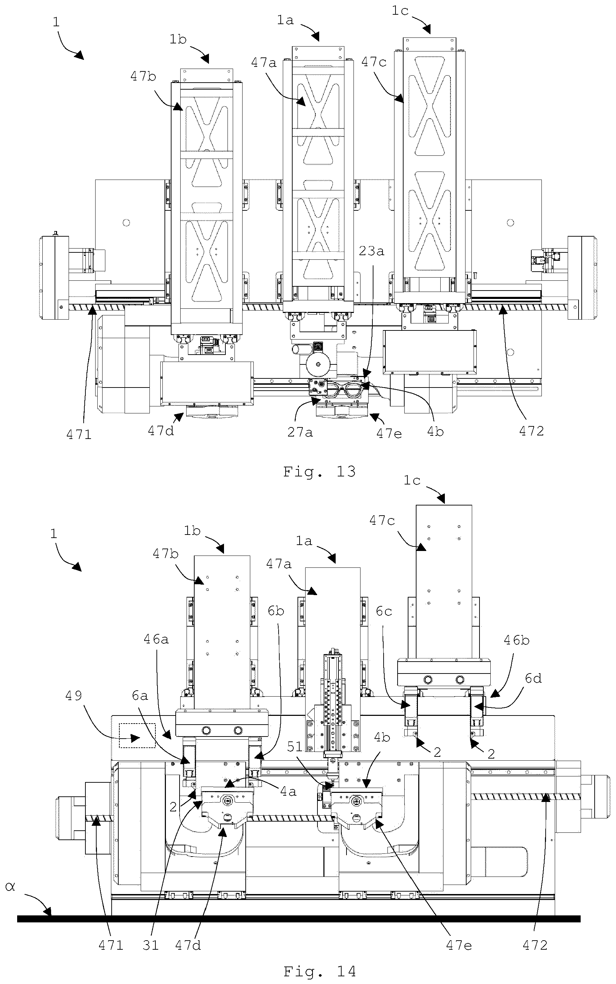

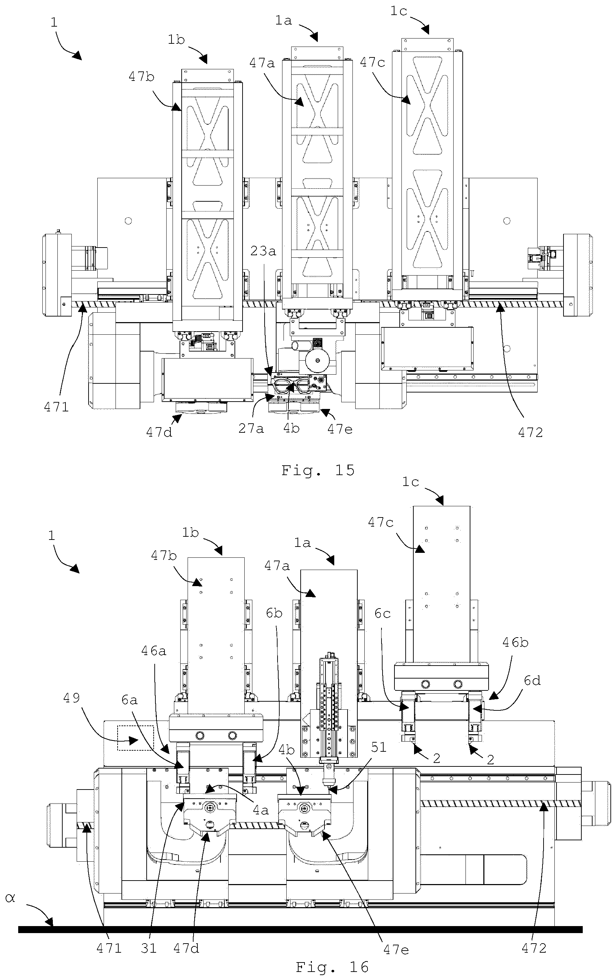

After the step in which the first frame front 4a is brought from the milling-station 1a to the first hinging-station 1b, and the step in which a first and a second hinge part 2 are loaded onto the first hinging means 46a, the method according to the invention comprises a step in which the first hinge part 2 is fixed into the first seat 5 (figures 13 and 14) and the second hinge part 2 is fixed into the second seat 5 (figures 15 and 16) by the first hinging means 46a.

In an advantageous embodiment of the method according to the invention, not illustrated, the first and second hinge parts 2 are fixed in the first seat 5 and second seat 5, respectively, at the same time.

In a further advantageous embodiment, such as the one illustrated in the appended figures, the first and second hinge parts 2 are fixed, respectively, in the first seat 5 and in the second seat 5, in sequence, i.e. one after the other.

Advantageously, the fixing of the first and second hinge parts 2 respectively in the first and second seats 5, advantageously comprises having an electric current passed through such hinge parts 2, so as to heat by Joule effect such first and second hinge parts 2, prior to and/or during their insertion, respectively, in the first and second seats 5, so that the heat generated melts the plastic material of the first frame front 4a at the first and second seats 5, respectively, so as to embed said first and second hinge parts 2 therein, when the plastic material, as it cools (when the supply of electric current is interrupted), solidifies within the first and second seats 5, respectively.

The process of fixing hinge parts using heating vices of this type is well known in the eyewear industry, and will not be described in detail.

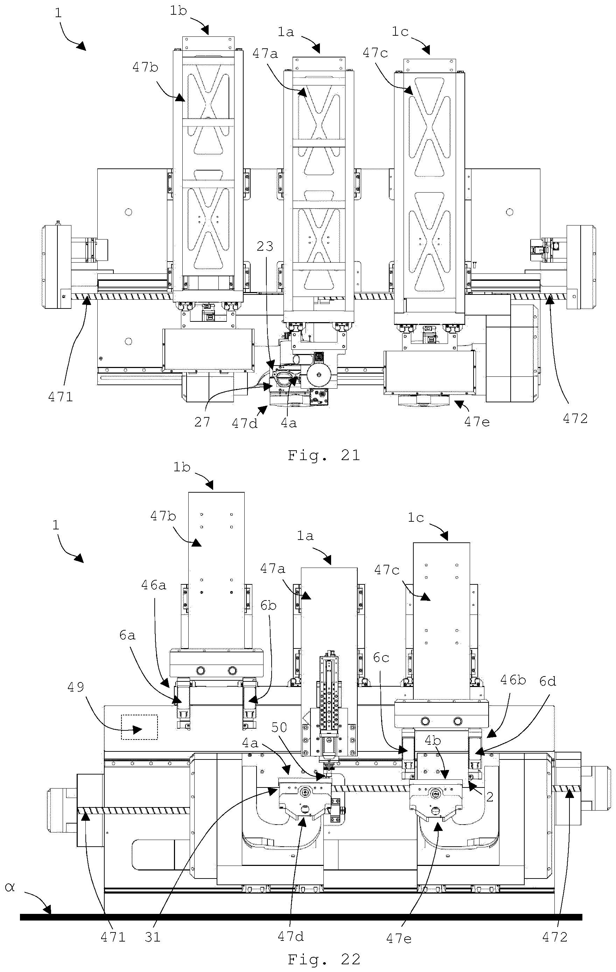

Advantageously, once the step of fixing the first hinge part 2 in the first seat 5 and the second hinge part 2 in the second seat 5 by means of the first hinging means 46a has been completed, the first frame front 4a can be removed from the hinging-machine 1, and advantageously, a further frame front, not illustrated, can be fixed to the first support and handling means 47d, and a new pair of hinge parts 2 can be loaded onto the first hinging means 46a. Alternatively, before being removed from the hinging-machine 1, the first frame front 4a can be advantageously returned to the milling-station 1a, by means of the first support and handling means 47d, to be subjected to a step of trimming the end pieces 400, which will be described below (figures 21, 22, 23, 24).

The method according to the invention comprises, after the step in which a second frame front 4b is placed on the second handling means 47b and, at the same time, or after, the step in which the first frame front 4a is brought from the milling-station 1a to the first hinging-station 1b, a step in which the second frame front 4b is brought from the second hinging-station 1c to the milling-station 1a (condition illustrated, for example, in figures 13 and 14).

The method according to the invention comprises, before or after the step in which the second frame front 4b is brought from the second hinging-station 1c to the milling-station 1a, a step in which the position of the second frame front 4b is detected in the hinging-machine 1, using the measurement means 48 (figures 13, 14, 15, 16).

In an advantageous embodiment, such as the one shown in the appended figures, the measurement means 48 are only comprised in the milling-station 1a. In this case, the step in which the position of the second frame front 4b is detected in the hinging-machine 1, using the measurement means 48, is carried out after the step in which the second frame front 4b is brought from the second hinging-station 1c to the milling-station 1a.

Advantageously, the measurement means 48 may be present, alternatively or in addition to in the milling-station 1a, in the second hinging-station 1c; in this case, the step in which the position of the second frame front 4b in the hinging-machine 1 is detected, using the measurement means 48, may be performed alternatively or in addition to in the milling station 1a, before the step in which the second frame front 4b is brought from the second hinging-station 1c to the milling-station 1a.

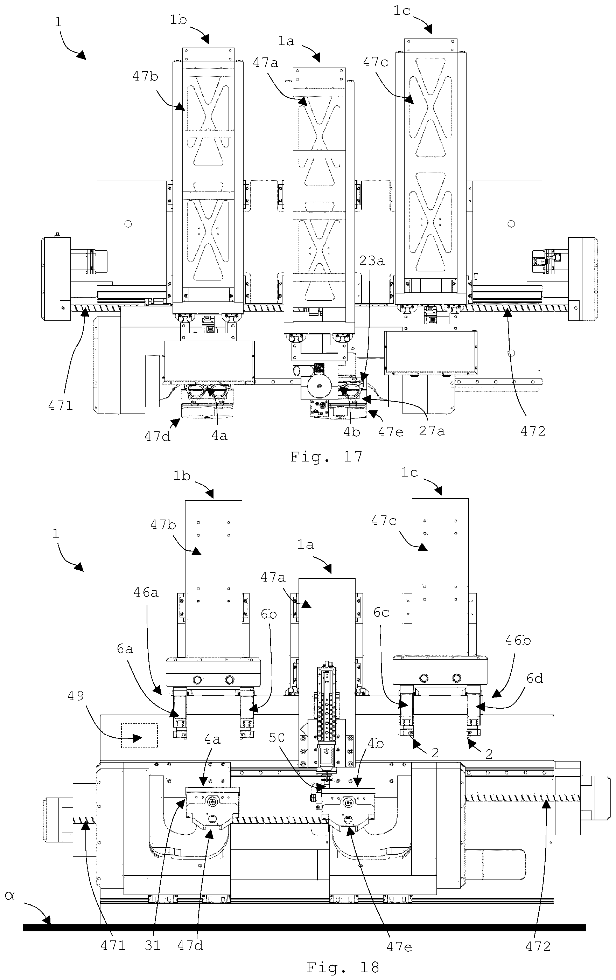

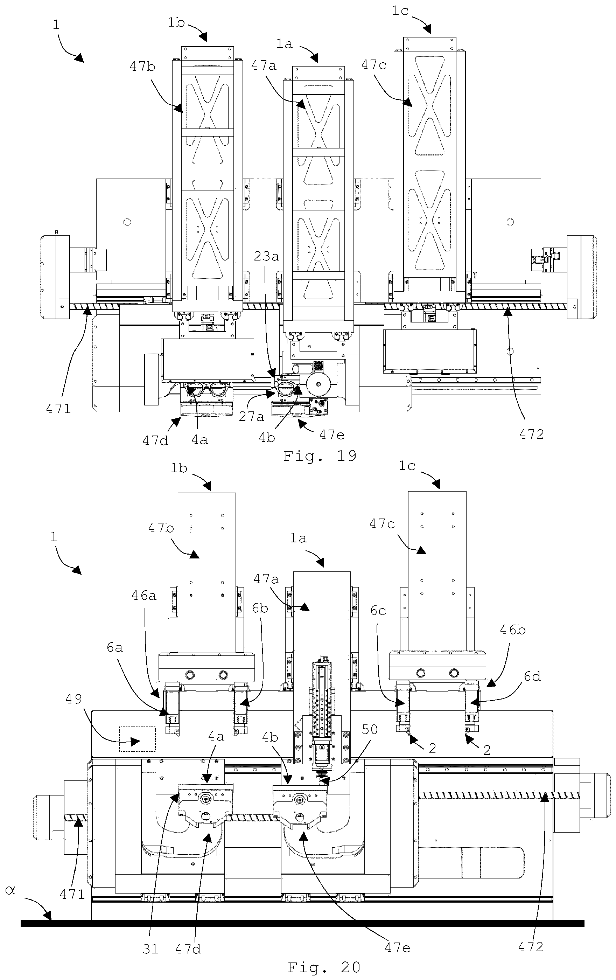

The method according to the invention comprises, after the step of bringing the second frame front 4b from the second hinging-station 1c to the milling-station 1a, and the step of obtaining the position of the second frame front 4b in the hinging-machine 1, using the measurement means 48 (preferably, but not necessarily, at the same time as the step of fixing the first hinge part 2 in the first seat 5 and the second hinge part 2 in the second seat 5) comprises a step (figures 17, 18, 19 and 20) in which a third seat and a fourth seat, not illustrated, hollow and open outwards, are obtained by milling, on a third portion made of thermoplastic material, not illustrated, of the second frame front 4b, or, respectively, on a third portion and a distinct fourth portion, not illustrated, made of thermoplastic material, of the second frame front 4b.

In an advantageous embodiment of the method according to the invention, the third seat and the fourth seat are obtained sequentially on the second frame front 4b, **i.e.** one after the other.

A further advantageous embodiment of the method according to the invention, not illustrated, provides for obtaining the position of the second frame front 4b, or a portion thereof, both before obtaining the third seat and before obtaining the fourth seat, thus limiting the risk of inaccurate machining due, for example, to misalignment of the second frame front 4a with respect to the milling means 45, caused, for example, by the milling performed to obtain the third seat 5.

An advantageous embodiment of the method according to the invention comprises, after the step in which the third seat 5 and the fourth seat 5 are obtained by milling, a step in which the second frame front 4b is brought from the milling-station 1a to the second hinging-station 1c by means of the second support and handling means 47e (a condition illustrated, for example, in figures 21, 22, 23, 24).

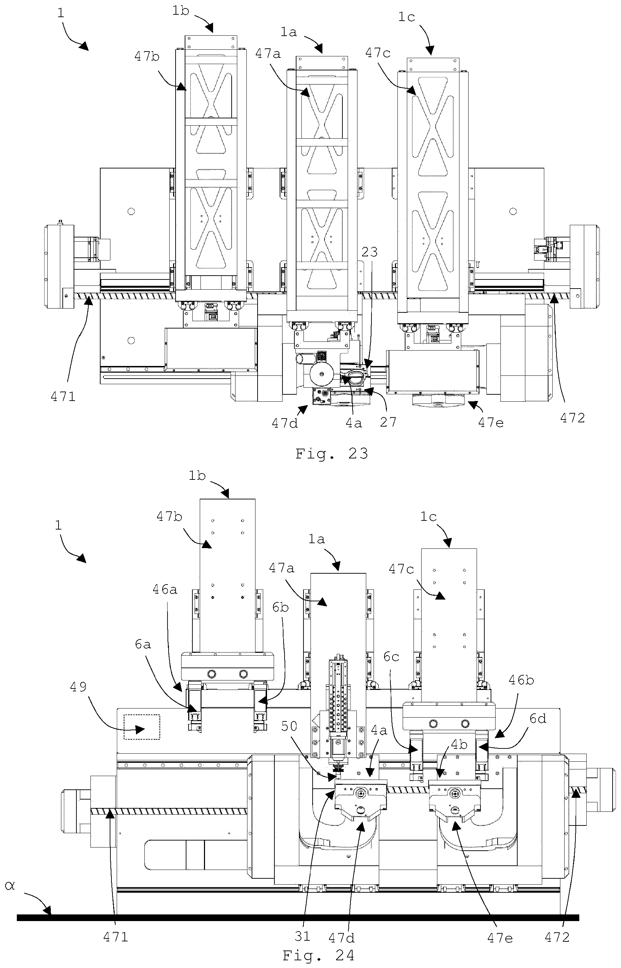

This advantageous embodiment of the method according to the invention comprises, after the step in which the second frame front 4b is brought from the milling-station 1a to the second hinging-station 1c, and the step in which a second and a third hinge part 2 is loaded onto the second hinging means 46b, a step in which the third hinge part 2 is fixed in the third seat (figures 21 and 22) and the fourth hinge part 2 is fixed in the fourth seat (figures 23 and 24) by the second hinging means 46b.

In an advantageous embodiment, not illustrated, the third and fourth hinge parts 2 are fixed in the third and fourth seats, respectively, at the same time.

In an advantageous embodiment, the third and fourth hinge parts 2 are fixed in the third and fourth seats, respectively, in sequence, i.e. one after the other.

It should be noted that the fixing of the third and fourth hinge parts 2, respectively, in the third seat and in the fourth seat, advantageously comprises having an electric current passed through such third and fourth hinge parts, so as to heat by Joule effect such third and fourth hinge parts 2, before and/or during their insertion, respectively, in the third and fourth seats, so that the heat melts the plastic material of the second frame front 4b at the third and fourth seats, respectively, so as to embed the respective hinge parts 2 therein when the plastic material, upon cooling, solidifies within the third and fourth seats, respectively.

In an advantageous embodiment, after or at the same time as, the step in which the second frame front 4b is brought from the milling-station 1a to the second hinging-station 1c, the method according to the invention comprises a step in which, instead of removing the first frame front 4a from the hinging-machine 1, the first frame front 4a is brought again from the first hinging-station 1b to the milling-station 1a (a condition illustrated in figures 21, 22, 23, 24).

This advantageous embodiment of method according to the invention comprises, after the step of bringing the first frame front 4a from the first hinging-station 1b back to the milling-station 1a (preferably at the same time as the step of inserting the third hinge part 2 into the third seat and the fourth hinge part 2 into the fourth seat), a step (figures 21, 22, 23, 24) in which a step of trimming the end pieces 400 of the first frame front 4a is performed in the milling-station 1a.

Preferably, but not necessarily, such step of trimming the end pieces 400 comprises, before the actual trimming, a step (not illustrated) of obtaining again the position of the first frame front 4a, or a portion thereof, by means of the measurement means 48.

Advantageously, after the step of trimming the end pieces 400, the first frame front 4a can be removed from the hinging-machine 1, either directly from the milling-station 1a, or from the first hinging-station 1b, wherein this first frame front 4a can be brought by the first support and handling means 47d.

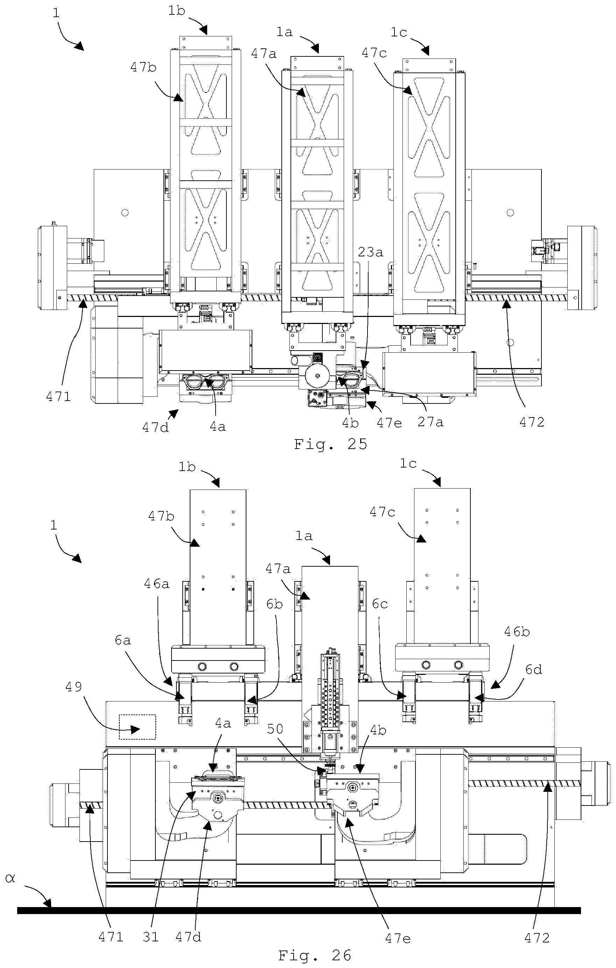

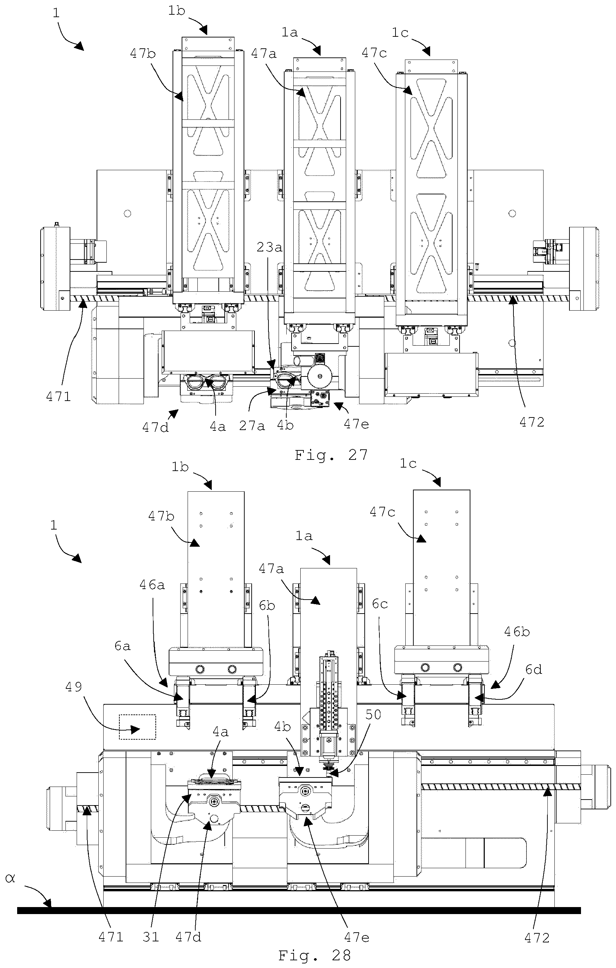

Advantageously, once the first frame front 4a has been removed from the milling-station 1a (e.g. brought to the first hinging-station 1b, or removed from the machine directly from the milling-station 1a), the second frame front 4b can advantageously be brought back to the milling-station 1a by the second support and handling means 47e, and can advantageously be subjected to a step of trimming the end pieces 400 (figures 25, 26, 27 and 28), similar to which the first frame front 400 was subjected.

As mentioned, once the first frame front 4a has been removed, a further pair of hinge parts 2, not illustrated, can be loaded onto the first hinging means 46a, and a further frame front, not illustrated, can be fixed to the first support and handling means 47d, to undergo the milling and hinging operations described above, bringing it to the milling-station 1a, alternatively to the second frame front 4b.

It should be emphasised that, in the method according to the invention, the first frame front 4a, after being positioned on the first support and handling means 47d, is never removed therefrom during the various handling and processing steps (milling, hinging, possible trimming) described above.

Once the respective hinging step is completed, and any trimming of its end pieces 400 has been completed, the second frame front 4b can also be removed, advantageously in the milling-station 1a or in the second hinging-station 1c; at this point, a new pair of hinge parts 2, not illustrated, can be loaded onto the second hinging means 46b, and a further frame front, not illustrated, can be fixed to the second support and handling means 47e to undergo the previously described milling and hinging operations, bringing the same into the milling-station 1a, alternatively to the frame front fixed to the first support and handling means 47d.

It should be emphasised that, in the method according to the invention, also the second frame front 4b after being positioned on the second support and handling means 47e, is never removed therefrom during the various handling and processing steps (milling, hinging, possible trimming) described above.

It was thus found that the hinging-machine and the method according to the invention solve the task and purposes stated above.

Thanks to the possibility of creating two seats for the fixing of two hinge parts on the same eyeglasses frame front in the milling-station, and thanks to the possibility of fixing two hinge parts in these seats, within the same hinging-station, without having to reposition the frame front manually between the fixing of the first hinge part and of the second hinge part, the risk of producing defective eyeglasses frames as a result of incorrect fixing of the hinge parts on the frame front, which in known solutions is often due to incorrect manual repositioning of the frame front in the hinging-machine, is reduced.

Being able to complete the hinging of an eyeglasses frame front without having to reposition it in the hinging-machine has the added advantage of reducing the time required to complete this process.

Furthermore, thanks to the possibility of automatically moving an eyeglasses frame front between the respective hinging-station and the milling-station, it is possible to complete the hinging of such a frame front in a fully automated manner, thus reducing the time taken for such process, and increasing precision.

A further advantage of the hinging-machine and the method according to the invention is that it is possible to work on two frame fronts of two distinct frames at the same time, e.g. by obtaining the seats on one of the two frame fronts in the milling-station, while fixing the hinge parts on the other frame front in the respective hinging-station, thus reducing the time (and consequently the costs) for the production of the two frames.

The advantageous embodiment of a hinging-machine according to the invention configured to also perform the trimming of the end pieces has the additional advantage of allowing the hinge and end piece trimming operations to be performed in succession, without having to remove the frame front from the hinging-machine after hinging to reposition it on another machine to perform the trimming of the end pieces. This eliminates the costs that would have to be incurred for the purchase of an additional machine to perform the trimming of the frame front end pieces, and the time required to reposition the hinged frame front in such a machine.

Finally, it is clear that the hinging machine and method according to the invention described herein are susceptible to numerous modifications or variations, all of the details are replaceable by technically equivalent elements without departing from the scope of the appended claims.

## Claims

1. Hinging-machine (1) for eyewear comprising:
- a milling-station (1a) equipped with milling means (45) suitable for obtaining, by milling, one or more seats (5), hollow and open outwards, on one or more portions (3), of an eyeglasses frame front (4), made of a thermoplastic material;
- a first hinging-station (1b) comprising first hinging means (46a) suitable for grabbing two metallic hinge parts (2) of two hinges for eyeglasses, and for fixing them to respective seats (5) obtained in a frame front (4) for eyeglasses frames, when said frame front (4) is placed in said first hinging-station (1a);
- first support and handling means (47d) suitable for supporting a frame front (4) for eyeglasses frames and for moving it from said milling-station (1a) to said first hinging-station (1b), and vice versa;
**characterized in that** it further comprises:
- a second hinging-station (1c) comprising second hinging means (46b) suitable for grabbing two metallic hinge parts (2) of two hinges for eyeglasses, and for fixing them to respective seats (5) obtained in a frame front (4) for eyeglasses frames, when said frame front (4) is placed in said second hinging-station (1c);
- second support and handling means (47e) suitable for supporting a frame front (4) for eyeglasses frames and for moving it from said milling-station (1a) to said second hinging-station (1c), and vice versa;
- measurement means (48) suitable for obtaining the spatial position of a frame front (4) for eyeglasses frames, or of a portion thereof, when said frame front (4) is positioned on said first support and handling means (47d) or on said second support and handling means (47e) ;
- control means (49) comprised in, or operationally connected to, said hinging-machine (1) and configured to control said milling means (45), said first and second hinging means (46a, 46b), said first support and handling means (47d), said second support and handling means (47e), and said measurement means (48);
and wherein:
- said milling means (45) are configured to obtain, by milling, on a frame front (4) for eyeglasses frames, two seats (5) which are hollow and open outwards;
- said first hinging means (46a) are configured to fix two hinge parts (2) in respective seats (5) obtained in a frame front (4) for eyeglasses frames;
- said second hinging means (46b) are configured to fix two hinge parts (2) in respective seats (5) obtained in a frame front (4) for eyeglasses frames;
- said control means (49) are configured to operate said milling means (45) in such a way as to obtain by milling on a first frame front (4a), located inside said milling station (1a), two seats (5) for as many hinge parts (2) and, at the same time, operate said first hinging means (46a) or said second hinging means (46b) to fix two hinge parts (2) in respective seats (5) of a second frame front (4b), located respectively within said first hinging-station (1b) or within said second hinging-station (1c).

2. Hinging-machine (1), as in claim 1, wherein said control means (49) are configured to control said milling means (45) in such a way as to cause them to execute, within said milling-station (1a), a process of trimming the end pieces (400) of a frame front (4) for eyeglasses frames.

3. Hinging-machine (1), as in one or more previous claims, wherein said first hinging means (46a) comprise a first heating vice (6a) and a second heating vice (6b), each equipped with a pair of metallic jaws, each of said pairs of metallic jaws being configured to grab a hinge part (2).

4. Hinging-machine (1), as in one or more previous claims, wherein said second hinging means (46b) comprise a third heating vice (6c) and a fourth heating vice (6d), each equipped with two metallic jaws, each of said pairs of metallic jaws being configured to grab a hinge part (2).

5. Hinging-machine (1), as in one or more previous claims, wherein said first support and handling means (47d) comprise:
- a first support plate (23) wherein a first support seat (24) is obtained defined by a first support surface (25) at least partially counter-shaped to a first reference portion (26') of a first reference frame front (4') and a second support plate (27) wherein a second support seat (28) is obtained defined by a second support surface (29) at least partially counter-shaped to a second reference portion (30') of said first reference frame front (4');
- first closing means (31), configured to selectively move closer to each other said first support plate (23) and said second support plate (27), so as to clamp therebetween a frame front (4) for eyeglasses frames with a first portion (26), with a conformation substantially equal to said first reference portion (26'), and with a second portion (30), with a conformation substantially equal to said second reference portion (30'), in a fastening position wherein the counter-shaped parts of said first portion (26) and of said first support surface (25) match, and the counter-shaped parts of said second portion (30) and of said second support surface (29) match.

6. Hinging-machine (1), as in one or more previous claims, wherein said second support and handling means (47e) comprise:
- a third support plate (23a) wherein a third support seat is obtained defined by a third support surface at least partially counter-shaped to a third reference portion of a second reference frame front, and a fourth support plate (27a) wherein a fourth support seat is obtained defined by a fourth support surface at least partially counter-shaped to a fourth reference portion of said second reference frame front
- second closing means, configured to selectively move closer to each other said third support plate (23a) and said fourth support plate (27a), so as to clamp therebetween a frame front (4) for eyeglasses frames with a third portion, with a conformation substantially equal to said third reference portion, and with a fourth portion, with a conformation substantially equal to said fourth reference portion, in a fastening position wherein the counter-shaped parts of said third portion and of said third support surface match, and the counter-shaped parts of said fourth portion and of said fourth support surface match.

7. Method for the hinging of frame fronts (4) for eyeglasses frames, achieved using a hinging-machine (1) according to one or more previous claims, **characterised by** comprising the following steps:
- positioning a first frame front (4a) on said first support and handling means (47d);
- positioning a second frame front (4b) on said second support and handling means (47e);
- loading a first and a second hinge part (2) on said first hinging means (46a);
- loading a third and a fourth hinge part (2c, 2d) on said second hinging means (46b);
- after said step of positioning a first frame front (4a) on said first support and handling means (47d), bringing said first frame front (4a) from said first hinging-station (1b) to said milling-station (1a) by said first support and handling means (47d);
- before or after said step of bringing said first frame front (4a) from said first hinging-station (1b) to said milling-station (1a), obtaining the position of said first frame front (4a) in said hinging-machine (1) by said measurement means (48);
- after said step of bringing said first frame front (4a) from said first hinging-station (1b) to said milling-station (1a), and after said step of obtaining the position of said first frame front (4a) in said hinging-machine (1) by said measurement means (48), obtaining, by said milling means (45), in said milling-station (1a), a first and a second seat (5), hollow and open outwards, in a portion (3) made of a thermoplastic material of said first frame front (4a), or, respectively, on two separate portions (3) made of a thermoplastic material of said first frame front (4a);
- after said step of obtaining, by said milling means (45), a first and a second seat (5) on a portion (3) made of a thermoplastic material of said first frame front (4a), bringing said first frame front (4a) from said milling-station (1a) to said first hinging-station (1b) by said first support and handling means (47d);
- after said step of bringing said first frame front (4a) from said milling-station (1a) to said first hinging-station (1b), and after said step of loading a first and a second hinge part (2) on said first hinging means (46a), fixing, in said first hinging-station (1b) , said first hinge element (2) to said first seat and said second hinge element (2) to said second seat by said first hinging means (46a);
- after said step of positioning a second frame front (4b) on said second support and handling means (47e) and simultaneously to, or after, said step of bringing said first frame front (4a) from said milling-station (1a) to said first hinging-station (1b), bringing said second frame front (4b) from said second hinging-station (1c) to said milling-station (1a) by said second support and handling means (47e);
- before or after said step of bringing said second frame front (4b) from said second hinging-station (1c) to said milling-station (1a), obtaining the position of said second frame front (4b) in said hinging-machine (1) by said measurement means (48);
- after said step of bringing said second frame front (4b) from said second hinging-station (1c) to said milling-station (1a), and said stage of obtaining the position of said second frame front (4b) in said hinging-machine (1) by said measurement means (48), obtaining, by said milling means (45), in said milling-station (1a), a third seat and a fourth seat, hollow and open outwards, on a third portion made of a thermoplastic material, or, respectively, on a third portion and a distinct fourth portion made of a thermoplastic material, of said second frame front (4b).

8. Method for hinging frame fronts (4) for eyeglasses frames, as in claim 7, made using a hinging-machine (1) as in claim 2 or in a claim depending on claim 2, comprising the following step:
- after said step of obtaining, by said milling means (45), a third seat and a fourth seat in a portion made of a thermoplastic material of said second frame front (4b), bringing said second frame front (4b) from said milling-station (1a) to said second hinging-station (1c) by said second support and handling means (47d);
- after said step of bringing said second frame front (4b) from said milling-station (1a) to said second hinging-station (1b) and after said step of loading a third and a fourth hinge part on said second hinging means (46b), fixing, in said second hinging-station (1c), said third hinge part in said third seat and said fourth hinge part in said fourth seat by said second hinging means (46b).

9. Method, as in claim 8, comprising the following steps:
- after, or simultaneously to, said step of bringing said second frame front (4b) from said milling-station (1a) to said second hinging-station (1c), bringing again said first frame front (4a) from said first hinging-station (1b) to said milling-station (1a) by said first support and handling means (47d);
- after said step of bringing said first frame front (4a) from said first hinging-station (1b) to said milling-station (1a), executing a process of trimming the end pieces (400) of said first frame front (4a) in said milling-station (1a).

## Patentansprüche

1. Scharniermaschine (1) für Brillen, umfassend:
- eine Frässtation (1a), die mit Fräsmitteln (45) ausgestattet ist, die geeignet sind, durch Fräsen einen oder mehrere Sitze (5), die hohl und nach außen offen sind, auf einem oder mehreren Abschnitten (3) einer Brillengestellfront (4) aus einem thermoplastischen Material zu erhalten;
- eine erste Scharnierstation (1b), umfassend erste Scharniermittel (46a), die geeignet sind, zwei metallische Scharnierteile (2) von zwei Brillenscharnieren zu ergreifen und sie an entsprechenden Sitzen (5) zu befestigen, die in einer Gestellfront (4) für Brillengestelle erhalten werden, wenn die Gestellfront (4) in der ersten Scharnierstation (1a) angeordnet ist;
- erste Stütz- und Handhabungsmittel (47d), die geeignet sind, eine Gestellfront (4) für Brillengestelle zu stützen und sie von der Frässtation (1a) zu der ersten Scharnierstation (1b) und umgekehrt zu bewegen;
**dadurch gekennzeichnet, dass** sie ferner umfasst:
- eine zweite Scharnierstation (1c), umfassend zweite Scharniermittel (46b), die geeignet sind, zwei metallische Scharnierteile (2) von zwei Brillenscharnieren zu ergreifen und sie an entsprechenden Sitzen (5) zu befestigen, die in einer Gestellfront (4) für Brillengestelle erhalten werden, wenn die Gestellfront (4) in der zweiten Scharnierstation (1c) angeordnet ist;
- zweite Stütz- und Handhabungsmittel (47e), die geeignet sind, eine Gestellfront (4) für Brillengestelle zu stützen und sie von der Frässtation (1a) zu der zweiten Scharnierstation (1c) und umgekehrt zu bewegen;
- Messmittel (48), die geeignet sind, die räumliche Position einer Gestellfront (4) für Brillengestelle oder eines Abschnitts davon zu erhalten, wenn die Gestellfront (4) auf den ersten Stütz- und Handhabungsmitteln (47d) oder auf den zweiten Stütz- und Handhabungsmitteln (47e) positioniert ist;
- Steuermittel (49), die in der Scharniermaschine (1) enthalten oder mit dieser betriebsmäßig verbunden sind und so konfiguriert sind, dass sie die Fräsmittel (45), die ersten und zweiten Scharniermittel (46a, 46b), die ersten Stütz- und Handhabungsmittel (47d), die zweiten Stütz- und Handhabungsmittel (47e) und die Messmittel (48) steuern;
und wobei:
- die Fräsmittel (45) so konfiguriert sind, dass sie durch Fräsen auf einer Gestellfront (4) für Brillengestelle zwei Sitze (5) erhalten, die hohl und nach außen offen sind;
- die ersten Scharniermittel (46a) so konfiguriert sind, dass sie zwei Scharnierteile (2) in entsprechenden Sitzen (5) befestigen, die in einer Gestellfront (4) für Brillengestelle erhalten werden;
- die zweiten Scharniermittel (46b) so konfiguriert sind, dass sie zwei Scharnierteile (2) in entsprechenden Sitzen (5) befestigen, die in einer Gestellfront (4) für Brillengestelle erhalten werden;
- die Steuermittel (49) so konfiguriert sind, dass sie die Fräsmittel (45) so betätigen, dass sie durch Fräsen an einer ersten Gestellfront (4a), die sich innerhalb der Frässtation (1a) befindet, zwei Sitze (5) für ebenso viele Scharnierteile (2) erhalten und gleichzeitig die ersten Scharniermittel (46a) oder die zweiten Scharniermittel (46b) betätigen, um zwei Scharnierteile (2) in entsprechenden Sitzen (5) einer zweiten Gestellfront (4b) zu befestigen, die sich jeweils innerhalb der ersten Scharnierstation (1b) oder innerhalb der zweiten Scharnierstation (1c) befinden.

2. Scharniermaschine (1) nach Anspruch 1, wobei die Steuermittel (49) so konfiguriert sind, dass sie die Fräsmittel (45) so steuern, dass sie innerhalb der Frässtation (1a) einen Prozess des Beschneidens der Endstücke (400) einer Gestellfront (4) für Brillengestelle ausführen.

3. Scharniermaschine (1) nach einem oder mehreren der vorstehenden Ansprüche, wobei die ersten Scharniermittel (46a) einen ersten Heizschraubstock (6a) und einen zweiten Heizschraubstock (6b) umfassen, die jeweils mit einem Paar von Metallbacken ausgestattet sind, wobei jedes der Paare von Metallbacken so konfiguriert ist, dass es ein Scharnierteil (2) ergreift.

4. Scharniermaschine (1) nach einem oder mehreren der vorstehenden Ansprüche, wobei die zweiten Scharniermittel (46b) einen dritten Heizschraubstock (6c) und einen vierten Heizschraubstock (6d) umfassen, die jeweils mit zwei Metallbacken ausgestattet sind, wobei jedes der Paare von Metallbacken so konfiguriert ist, dass es ein Scharnierteil (2) ergreift.

5. Scharniermaschine (1) nach einem oder mehreren der vorstehenden Ansprüche, wobei die ersten Stütz- und Handhabungsmittel (47d) umfassen:
- eine erste Stützplatte (23), wobei ein erster Stützsitz (24) erhalten wird, der durch eine erste Stützfläche (25) definiert wird, die mindestens teilweise gegenförmig zu einem ersten Referenzabschnitt (26') einer ersten Referenzgestellfront (4') ist, und eine zweite Stützplatte (27), wobei ein zweiter Stützsitz (28) erhalten wird, der durch eine zweite Stützfläche (29) definiert wird, die mindestens teilweise gegenförmig zu einem zweiten Referenzabschnitt (30') der ersten Referenzgestellfront (4') ist;
- erste Schließmittel (31), die so konfiguriert sind, dass sie die erste Stützplatte (23) und die zweite Stützplatte (27) selektiv näher zueinander bewegen, um dazwischen eine Gestellfront (4) für Brillengestelle mit einem ersten Abschnitt (26) mit einer Form, die im Wesentlichen gleich dem ersten Referenzabschnitt (26') ist, und mit einem zweiten Abschnitt (30) mit einer Form, die im Wesentlichen gleich dem zweiten Referenzabschnitt (30') ist, in einer Befestigungsposition einzuklemmen, in der die gegenförmigen Teile des ersten Abschnitts (26) und der ersten Stützfläche (25) zusammenpassen, und die gegenförmigen Teile des zweiten Abschnitts (30) und der zweiten Stützfläche (29) zusammenpassen.

6. Scharniermaschine (1) nach einem oder mehreren vorstehenden Ansprüchen, wobei die zweiten Stütz- und Handhabungsmittel (47e) umfassen:
- eine dritte Stützplatte (23a), wobei ein dritter Stützsitz erhalten wird, der durch eine dritte Stützfläche definiert ist, die mindestens teilweise gegenförmig zu einem dritten Referenzabschnitt einer zweiten Referenzgestellfront ist, und eine vierte Stützplatte (27a), wobei ein vierter Stützsitz erhalten wird, der durch eine vierte Stützfläche definiert ist, die mindestens teilweise gegenförmig zu einem vierten Referenzabschnitt der zweiten Referenzgestellfront ist
- zweite Schließmittel, die so konfiguriert sind, dass sie die dritte Stützplatte (23a) und die vierte Stützplatte (27a) selektiv näher zueinander bewegen, um dazwischen eine Gestellfront (4) für Brillengestelle mit einem dritten Abschnitt mit einer Form, die im Wesentlichen gleich dem dritten Referenzabschnitt ist, und mit einem vierten Abschnitt mit einer Form, die im Wesentlichen gleich dem vierten Referenzabschnitt ist, in einer Befestigungsposition einzuklemmen, in der die gegenförmigen Teile des dritten Abschnitts und der dritten Stützfläche zusammenpassen, und die gegenförmigen Teile des vierten Abschnitts und der vierten Stützfläche zusammenpassen.

7. Scharnierverfahren von Gestellfronten (4) für Brillengestelle, das unter Verwendung einer Scharniermaschine (1) nach einem oder mehreren vorstehenden Ansprüchen durchgeführt wird, **dadurch gekennzeichnet, dass** es die folgenden Schritte umfasst:
- Positionieren einer ersten Gestellfront (4a) auf den ersten Stütz- und Handhabungsmitteln (47d);
- Positionieren einer zweiten Gestellfront (4b) auf den zweiten Stütz- und Handhabungsmitteln (47e);
- Laden eines ersten und eines zweiten Scharnierteils (2) auf die ersten Scharniermittel (46a);
- Laden eines dritten und eines vierten Scharnierteils (2c, 2d) auf die zweiten Scharniermittel (46b);
- nach dem Schritt des Positionierens einer ersten Gestellfront (4a) auf den ersten Stütz- und Handhabungsmitteln (47d), Verbringen der ersten Gestellfront (4a) von der ersten Scharnierstation (1b) zu der Frässtation (1a) durch die ersten Stütz- und Handhabungsmittel (47d);
- vor oder nach dem Schritt des Verbringens der ersten Gestellfront (4a) von der ersten Scharnierstation (1b) zu der Frässtation (1a), Erhalten der Position der ersten Gestellfront (4a) in der Scharniermaschine (1) durch die Messmittel (48);
- nach dem Schritt des Verbringens der ersten Gestellfront (4a) von der ersten Scharnierstation (1b) zu der Frässtation (1a) und nach dem Schritt des Erhaltens der Position der ersten Gestellfront (4a) in der Scharniermaschine (1) durch die Messmittel (48), Erhalten, durch die Fräsmittel (45), in der Frässtation (1a) eines ersten und eines zweiten Sitzes (5), die hohl und nach außen offen sind, in einem Abschnitt (3) aus einem thermoplastischen Material der ersten Gestellfront (4a) bzw. auf zwei getrennten Abschnitten (3) aus einem thermoplastischen Material der ersten Gestellfront (4a);
- nach dem Schritt des Erhaltens, durch die Fräsmittel (45), eines ersten und eines zweiten Sitzes (5) auf einem Abschnitt (3) aus einem thermoplastischen Material der ersten Gestellfront (4a), Verbringen der ersten Gestellfront (4a) von der Frässtation (1a) zu der ersten Scharnierstation (1b) durch die ersten Stütz- und Handhabungsmittel (47d);
- nach dem Schritt des Verbringens der ersten Gestellfront (4a) von der Frässtation (1a) zu der ersten Scharnierstation (1b) und nach dem Schritt des Ladens eines ersten und eines zweiten Scharnierteils (2) auf die ersten Scharniermittel (46a), Befestigen, in der ersten Scharnierstation (1b), des ersten Scharnierelements (2) an dem ersten Sitz und des zweiten Scharnierelements (2) an dem zweiten Sitz durch die ersten Scharniermittel (46a);
- nach dem Schritt des Positionierens einer zweiten Gestellfront (4b) auf den zweiten Stütz- und Handhabungsmitteln (47e) und gleichzeitig mit oder nach dem Schritt des Verbringens der ersten Gestellfront (4a) von der Frässtation (1a) zu der ersten Scharnierstation (1b), Verbringen der zweiten Gestellfront (4b) von der zweiten Scharnierstation (1c) zu der Frässtation (1a) durch die zweiten Stütz- und Handhabungsmittel (47e);
- vor oder nach dem Schritt des Verbringens der zweiten Gestellfront (4b) von der zweiten Scharnierstation (1c) zu der Frässtation (1a), Erhalten der Position der zweiten Gestellfront (4b) in der Scharniermaschine (1) durch die Messmittel (48);
- nach dem Schritt des Verbringens der zweiten Gestellfront (4b) von der zweiten Scharnierstation (1c) zu der Frässtation (1a) und dem Schritt des Erhaltens der Position der zweiten Gestellfront (4b) in der Scharniermaschine (1) durch die Messmittel (48), Erhalten, durch die Fräsmittel (45) in der Frässtation (1a), eines dritten Sitzes und eines vierten Sitzes, die hohl und nach außen offen sind, auf einem dritten Abschnitt aus einem thermoplastischen Material bzw. auf einem dritten Abschnitt und einem bestimmten vierten Abschnitt aus einem thermoplastischen Material der zweiten Gestellfront (4b).

8. Scharnierverfahren von Gestellfronten (4) für Brillengestelle nach Anspruch 7, das unter Verwendung einer Scharniermaschine (1) nach Anspruch 2 oder nach einem von Anspruch 2 abhängigen Anspruch durchgeführt wird, umfassend den folgenden Schritt:
- nach dem Schritt des Erhaltens, durch die Fräsmittel (45), eines dritten Sitzes und eines vierten Sitzes in einem Abschnitt aus einem thermoplastischen Material der zweiten Gestellfront (4b), Verbringen der zweiten Gestellfront (4b) von der Frässtation (1a) zu der zweiten Scharnierstation (1c) durch die zweiten Stütz- und Handhabungsmittel (47d);
- nach dem Schritt des Verbringens der zweiten Gestellfront (4b) von der Frässtation (1a) zu der zweiten Scharnierstation (1b) und nach dem Schritt des Ladens eines dritten und eines vierten Scharnierteils auf die zweiten Scharniermittel (46b), Befestigen, in der zweiten Scharnierstation (1c), des dritten Scharnierteils in dem dritten Sitz und des vierten Scharnierteils in dem vierten Sitz durch das zweite Scharniermittel (46b).

9. Verfahren nach Anspruch 8, umfassend die folgenden Schritte:
- nach oder gleichzeitig mit dem Schritt des Verbringens der zweiten Gestellfront (4b) von der Frässtation (1a) zu der zweiten Scharnierstation (1c), erneutes Verbringen der ersten Gestellfront (4a) von der ersten Scharnierstation (1b) zu der Frässtation (1a) durch die ersten Stütz- und Handhabungsmittel (47d);
- nach dem Schritt des Verbringens der ersten Gestellfront (4a) von der ersten Scharnierstation (1b) zu der Frässtation (1a), Ausführen eines Prozesses des Beschneidens der Endstücke (400) der ersten Gestellfront (4a) in der Frässtation (1a).

## Revendications

1. Machine d'articulation (1) pour article de lunetterie comprenant:
- une station de fraisage (1a) équipée de moyens de fraisage (45) aptes à obtenir, par fraisage, un ou plusieurs sièges (5), creux et ouverts vers l'extérieur, sur une ou plusieurs portions (3), d'une face avant de monture (4) de lunettes, faite en matière thermoplastique;
- une première station d'articulation (1b) comprenant des premiers moyens d'articulation (46a) aptes à saisir deux parties d'articulations métalliques (2) de deux articulations pour lunettes, et à les fixer sur des sièges respectifs (5) obtenus dans une face avant de monture (4) pour montures de lunettes, lorsque ladite face avant de monture (4) est placée dans ladite première station d'articulation (1a);
- des premiers moyens de support et de manipulation (47d) aptes à supporter une face avant de monture (4) pour montures de lunettes et à la déplacer de ladite station de fraisage (1a) à ladite première station d'articulation (1b), et vice-versa; **caractérisée en ce qu'**elle comprend en outre:
- une deuxième station d'articulation (1c) comprenant des deuxièmes moyens d'articulation (46b) aptes à saisir deux parties d'articulations métalliques (2) de deux articulations pour lunettes, et à les fixer sur des sièges respectifs (5) obtenus dans une face avant de monture (4) pour montures de lunettes, lorsque ladite face avant de monture (4) est placée dans ladite deuxième station d'articulation (1c);
- des deuxièmes moyens de support et de manipulation (47e) aptes à supporter une face avant de monture (4) pour montures de lunettes et à la déplacer de ladite station de fraisage (1a) à ladite deuxième station d'articulation (1c), et vice-versa;
- des moyens de mesure (48) aptes à obtenir la position spatiale d'une face avant de monture (4) pour montures de lunettes, ou d'une portion de celle-ci, lorsque ladite face avant de monture (4) est positionnée sur lesdits premiers moyens de support et de manipulation (47d) ou sur lesdits deuxièmes moyens de support et de manipulation (47e);
- des moyens de commande (49) compris dans ladite machine d'articulation (1), ou reliés à celle-ci de manière opérationnelle, et configurés pour commander lesdits moyens de fraisage (45), lesdits premier et deuxième moyens d'articulation (46a, 46b), lesdits premiers moyens de support et de manipulation (47d), lesdits deuxièmes moyens de support et de manipulation (47e), et lesdits moyens de mesure (48);
et dans laquelle:
- lesdits moyens de fraisage (45) sont configurés pour obtenir, par fraisage, sur une face avant de monture (4) pour montures de lunettes, deux sièges (5) creux et ouverts vers l'extérieur;
- ces premiers moyens d'articulation (46a) sont configurés pour fixer deux parties d'articulation (2) dans des sièges respectifs (5) obtenus dans une face avant de monture (4) pour montures de lunettes;
- lesdits deuxièmes moyens d'articulation (46b) sont configurés pour fixer deux parties d'articulation (2) dans des sièges respectifs (5) obtenus dans une face avant de monture (4) pour montures de lunettes;
- lesdits moyens de commande (49) sont configurés pour actionner lesdits moyens de fraisage (45) de manière à obtenir par fraisage sur une première face avant de monture (4a), située à l'intérieur de ladite station de fraisage (1a), deux logements (5) pour autant de pièces d'articulation (2) et, en même temps, actionner lesdits premiers moyens d'articulation (46a) ou lesdits deuxièmes moyens d'articulation (46b) pour fixer deux pièces d'articulation (2) dans des sièges (5) respectifs d'une deuxième face avant de monture (4b), située respectivement à l'intérieur de ladite première station d'articulation (1b) ou à l'intérieur de ladite deuxième station d'articulation (1c).

2. Machine d'articulation (1), selon la revendication 1, dans laquelle lesdits moyens de commande (49) sont configurés pour commander lesdits moyens de fraisage (45) de manière à leur faire exécuter, à l'intérieur de ladite station de fraisage (1a), un processus de découpage des pièces d'extrémité (400) d'une face avant de monture (4) pour montures de lunettes.

3. Machine d'articulation (1), selon une ou plusieurs revendications précédentes, dans laquelle lesdits premiers moyens d'articulation (46a) comprennent un premier étau chauffant (6a) et un deuxième étau chauffant (6b), chacun équipé d'une paire de mâchoires métalliques, chacune de ces paires de mâchoires métalliques étant configurée pour saisir une partie d'articulation (2).

4. Machine d'articulation (1), selon une ou plusieurs revendications précédentes, dans laquelle lesdits deuxièmes moyens d'articulation (46b) comprennent un troisième étau chauffant (6c) et un quatrième étau chauffant (6d), chacun équipé de deux mâchoires métalliques, chacune de ces paires de mâchoires métalliques étant configurée pour saisir une partie d'articulation (2).

5. Machine d'articulation (1), selon l'une ou plusieurs des revendications précédentes, dans laquelle les premiers moyens de support et de manipulation (47d) comprennent:
- une première plaque de support (23) dans laquelle un premier siège de support (24) est défini par une première surface de support (25) au moins partiellement opposée à une première portion de référence (26') de la première face avant de monture de référence (4') et une deuxième plaque de support (27) dans laquelle un deuxième siège de support (28) est défini par une deuxième surface de support (29) au moins partiellement opposée à une deuxième portion de référence (30') de la première face avant de monture de référence (4');
- des premiers moyens de fermeture (31), configurés pour rapprocher sélectivement l'une de l'autre ladite première plaque de support (23) et ladite deuxième plaque de support (27), de manière à serrer entre elles une face avant de monture (4) pour montures de lunettes avec une première portion (26), avec une conformation substantiellement égale à ladite première portion de référence (26'), et avec une deuxième portion (30), avec une conformation substantiellement égale à ladite deuxième portion de référence (30'), dans une position de fixation dans laquelle les parties contre-façonnées de ladite première portion (26) et de ladite première surface d'appui (25) correspondent, et les parties contre-façonnées de ladite deuxième portion (30) et de ladite deuxième surface d'appui (29) correspondent.

6. Machine d'articulation (1), selon l'une ou plusieurs des revendications précédentes, dans laquelle lesdits deuxièmes moyens de support et de manipulation (47e) comprennent:
- une troisième plaque de support (23a) dans laquelle un troisième siège de support est obtenu, défini par une troisième surface de support au moins partiellement opposée à une troisième portion de référence de la deuxième face avant de monture de référence, et une quatrième plaque de support (27a) dans laquelle un quatrième siège de support est obtenu, défini par une quatrième surface de support au moins partiellement opposée à une quatrième portion de référence de ladite deuxième face avant de monture de référence
- des deuxièmes moyens de fermeture, configuré pour rapprocher sélectivement l'une de l'autre ladite troisième plaque de support (23a) et ladite quatrième plaque de support (27a), de manière à serrer entre elles une face avant de monture (4) pour montures de lunettes avec une troisième portion, avec une conformation substantiellement égale à ladite troisième portion de référence, et avec une quatrième portion, avec une conformation substantiellement égale à ladite quatrième portion de référence, dans une position de fixation dans laquelle les parties contre-façonnées de ladite troisième portion et de ladite troisième surface de support correspondent, et les parties contre-façonnées de ladite quatrième portion et de ladite quatrième surface de support correspondent.

7. Procédé d'articulation de faces avant de montures (4) pour montures de lunettes, réalisé à l'aide d'une machine d'articulation (1) selon une ou plusieurs revendications précédentes, **caractérisé par** le fait de comprendre les étapes suivantes:
- positionnement d'une première face avant de monture (4a) sur lesdits premiers moyens de support et de manipulation (47d);
- positionnement d'une deuxième face avant de monture (4b) sur lesdits deuxièmes moyens de support et de manipulation (47e);
- chargement d'une première et d'une deuxième partie d'articulation (2) sur lesdits premiers moyens d'articulation (46a);
- chargement une troisième et d'une quatrième partie d'articulation (2c, 2d) sur lesdits deuxièmes moyens d'articulation (46b);
- après ladite étape de positionnement d'une première face avant de monture (4a) sur lesdits premiers moyens de support et de manipulation (47d), le fait d'amener ladite première face avant de monture (4a) de ladite première station d'articulation (1b) à ladite station de fraisage (1a) par lesdits premiers moyens de support et de manipulation (47d);
- avant ou après ladite étape consistant à amener ladite première face avant de monture (4a) de ladite première station d'articulation (1b) à ladite station de fraisage (1a), obtenir la position de ladite première face avant de monture (4a) dans ladite machine d'articulation (1) par lesdits moyens de mesure (48);
- après ladite étape d'amener ladite première face avant de monture (4a) de ladite première station d'articulation (1b) à ladite station de fraisage (1a), et après ladite étape d'obtenir la position de ladite première face avant de monture (4a) dans ladite machine d'articulation (1) par lesdits moyens de mesure (48), l'obtention, par lesdits moyens de fraisage (45), dans ladite station de fraisage (1a), d'un premier et d'un deuxième siège (5), creux et ouvert vers l'extérieur, dans une portion (3) en matière thermoplastique de ladite première face avant de monture (4a), ou, respectivement, sur deux portions séparées (3) en matière thermoplastique de ladite première face avant de monture (4a);
- après ladite étape d'obtention, par lesdits moyens de fraisage (45), d'un premier et d'un deuxième siège (5) sur une portion (3) en matière thermoplastique de ladite première face avant de monture (4a), amener ladite première face avant de monture (4a) de ladite station de fraisage (1a) à ladite première station d'articulation (1b) par lesdits premiers moyens de support et de manipulation (47d);
- après l'étape consistant à amener la première face de monture (4a) de la station de fraisage (1a) à la première station d'articulation (1b), et après l'étape consistant à charger un premier et un deuxième élément d'articulation (2) sur les premiers moyens d'articulation (46a), la fixation, dans la première station d'articulation (1b), du premier élément d'articulation (2) sur le premier siège et du deuxième élément d'articulation (2) sur le deuxième siège par les premiers moyens d'articulation (46a);
- après ladite étape de positionnement d'une deuxième face avant de monture (4b) sur lesdits deuxièmes support et moyens de manipulation (47e) et simultanément à, ou après, ladite étape d'amener ladite première face avant de monture (4a) de ladite station de fraisage (1a) à ladite première station d'articulation (1b), le fait d'amener ladite deuxième face avant de monture (4b) de ladite deuxième station d'articulation (1c) à ladite station de fraisage (1a) par lesdits deuxièmes support et moyens de manipulation (47e);
- avant ou après ladite étape consistant à amener ladite deuxième face avant de monture (4b) de ladite station d'articulation (1c) en deuxième lieu à ladite station de fraisage (1a), l'obtention de la position de ladite deuxième face avant de monture (4b) dans ladite machine d'articulation (1) par lesdits moyens de mesure (48);
- après ladite étape d'amener ladite deuxième face avant de monture (4b) de ladite deuxième station d'articulation (1c) à ladite station de fraisage (1a), et ladite étape d'obtention de la position de ladite deuxième face avant de monture (4b) dans ladite machine d'articulation (1) par lesdits moyens de mesure (48), l'obtention, par lesdits moyens de fraisage (45), dans ladite station de fraisage (1a), d'un troisième siège et d'un quatrième siège, creux et ouverts vers l'extérieur, sur une troisième portion en matière thermoplastique, ou, respectivement, sur une troisième portion et une quatrième portion distincte en matière thermoplastique, de ladite deuxième face avant de monture (4b).

8. Procédé d'articulation de faces avant de monture (4) pour montures de lunettes, selon la revendication 7, fait à l'aide d'une machine d'articulation (1) selon la revendication 2 ou selon une revendication dépendant de la revendication 2, comprenant l'étape suivante:
- après ladite étape d'obtention, par lesdits moyens de fraisage (45), d'un troisième siège et d'un quatrième siège dans une portion en matériau thermoplastique de ladite deuxième face avant de monture (4b), le fait d'amener ladite deuxième face avant de monture (4b) de ladite station de fraisage (1a) à ladite deuxième station d'articulation (1c) par lesdits deuxièmes moyens de support et de manipulation (47d);
- après l'étape consistant à amener la deuxième face avant de monture (4b) de la station de fraisage (1a) à la deuxième station d'articulation (1b) et après l'étape consistant à charger une troisième et une quatrième partie d'articulation sur les deuxièmes moyens d'articulation (46b), la fixation, dans la deuxième station d'articulation (1c), de la troisième partie d'articulation dans le troisième siège et de la quatrième partie d'articulation dans le quatrième siège à l'aide des deuxièmes moyens d'articulation (46b).

9. Procédé, selon la revendication 8, comprenant les étapes suivantes:
- après, ou simultanément à, ladite étape consistant à amener la deuxième face avant de monture (4b) de la station de fraisage (1a) à la deuxième station d'articulation (1c), le fait d'amener à nouveau la première face avant de monture (4a) de la première station d'articulation (1b) à la station de fraisage (1a) par les premiers moyens de support et de manipulation (47d);
- après ladite étape consistant à amener ladite la première face avant de monture (4a) de ladite première station d'articulation (1b) à ladite station de fraisage (1a), l'exécution d'un processus de rognage des pièces d'extrémité (400) de ladite la première face avant de monture (4a) dans ladite station de fraisage (1a).
